# EUROPEAN PATENT SPECIFICATION

(11) **EP 1 463 231 B1**
(45) Date of publication and mention of the grant of the patent: **11.01.2006**
(21) Application number: 03251891.2
(22) Date of filing: 26.03.2003
(51) Int. Cl.: H04L 5/02, H04L 27/26

(54) **An apparatus and method for transmitting of a plurality of signals**
Apparat und Methode zur Übertragung einer Vielzahl von Signalen
Appareil et procédé pour transmettre une pluralité de signaux

(43) Date of publication of application: 29.09.2004
(73) Proprietor: Extra Communication Tech. Co. Ltd., ChungHo, Taipei (TW)
(72) Inventor: Lin, Ming-Hsiung, PeiTou District, Taipei (TW)
(74) Representative: Pratt, David Martin

(56) References cited:
- EP-A- 0 913 973
- US-B1- 6 442 224
- POLLET T ET AL: "SYNCHRONIZATION WITH DMT MODULATION" IEEE COMMUNICATIONS MAGAZINE, IEEE SERVICE CENTER. PISCATAWAY, N.J, US, [Online] vol. 37, no. 4, April 1999 (1999-04), pages 80-86, XP000823991 ISSN: 0163-6804

## Description

### 1. Field of the Invention:

This invention relates to an apparatus and a method for processing a plurality of signals, more particularly, to an apparatus and method for processing a plurality of signals which can simultaneously transmit a plurality of signals in a single transmission line or channel and the bandwidth is invariant to the types or amount of the signals.

### 2. Background of the Invention

In the present age, the need of the data transmitting efficiency grows in an exponential rate. The lack of bandwidth is noticed in both digital and analogue data transmissions through both wired and wireless mediums, such as in internets, broadcasting channels, and cell phones,

Traditionally, two methods were used to increase the data transmitting capacity within a limited bandwidth. The first method is dividing a relatively wide bandwidth into several narrower bands so as to simultaneously transmit signals which have been pre-modulated into different bandwidths. Examples of this first method are the signal transmitting of traditional televisions and radios. Because high techniques are required and interferences easily occur during transmitting, , only limited number of channels are available via this first transmitting method. Thus, the need of the bandwidth at the present age cannot be fulfilled.

The second method is cutting the plurality of signals into small segments and transmitting at different time under the same frequency. Segments of signal are reconnected at the receiving end. Data transmitting of the traditional internet is an example. However, this second data-transmitting method has low efficiencies and frequently resulting in internet jam while simultaneously transmitting large amount of signals.

The US Pat. No. 6,442,224 B1 (which patent right has been transferred to the same assignee of this present invention and is referred as Pat.224 hereafter) revealed a method and apparatus for mixing and separating a plurality of signals. As in the Pat. 224, linearly independent signals are separated, n samples (Sᵢ(tⱼ) , j=1,2,.....n) are taken from each of the separated m signals (Sᵢ(t) , i=1,2,.....m). The n samples were multiplied by linearly independent signals (such as m X n sets of different sinusoidal signals ᵢaⱼ(t)) and the products were summed to form a single mixed signal m SM(t) for transmitting, wherein $SM ( t ) = {\sum }_{i = 1}^{m} {S}_{i}^{o} ( t ) ,$ and ${S}_{i}^{o} ( t ) = {\sum }_{j = 1}^{n} [ Si ( tj ) iaj ( t ) ] , i = 1 , 2 , ...... m ) .$ Transmitting this single mixed signal SM(t) requires only single bandwidth which is the maximum bandwidth of the selected ᵢaⱼ(t). This single bandwidth is affected neither by the amount nor by the bandwidths of Sᵢ(t). Therefore, a plurality of signals can simultaneously be transmitted which resolving the problems about limited bandwidth in the prior techniques.

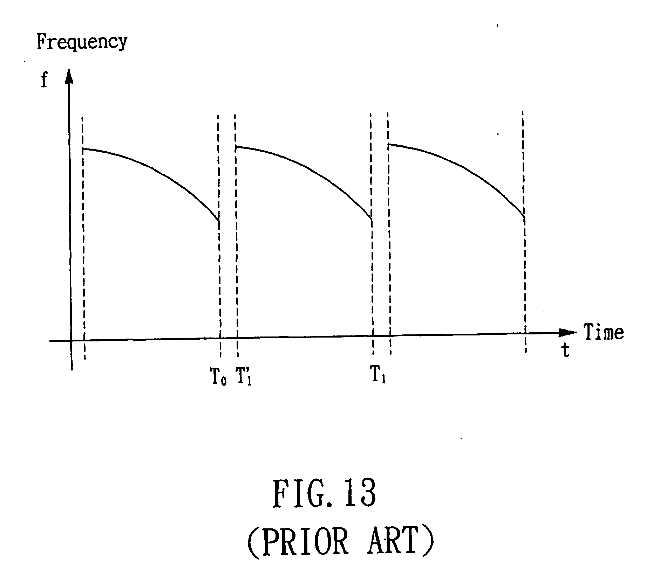

However, there are still some problems in Pat. 224.
(1) In pat. 224, the signal SM(t) is transmitted and received in segments with the time period [T₀, T₁] of each segment. A synchronous signal is transmitted first and followed by the main data signal SM(t) within each time period. At the receiving end, the main data signals are received after receiving the synchronous signal. Therefore, the time period [T₀, T₁] as described in Pat. 224 has to be separated into two intervals [T₀, T₁'] and [T₁', T₁] wherein T₀< T₁'< T,. The interval [T₀, T₁'] is referred as synchronizing time period which is used for transmitting the synchronous signal; whereas, the interval [T₁', T₁] is referred as data period which is used for transmitting the main data signal SM(t). Consequently, the synchronizing time period causes a time delay and the main data signal SM(t) is not able to complete the whole cycle within the time period [T₀, T₁]. Thus, interruptions of the main data signal SM(t) may occur as described in figure 13.
(2) In Pat. 224, the method of selecting m x n sets of linearly independent signals (such as sinusoidal signal ᵢaⱼ(t)) is to equally cut the pre-determined bandwidth into several frequency bands to obtain signal ᵢaⱼ(t). This method is appropriate while in low frequency conditions. However, if in the high frequency conditions, the two consecutive frequency bands will be difficult to be separated and processed. For example, if the pre-determined maximum bandwidth is 4K Hz and will be cut into 100 bands, there will be a 40Hz difference between two consecutive frequency bands. In low frequency condition such as 40 Hz versus 80 Hz, the signal is easy to be processed because 80 Hz is twice of 40 Hz. However, in high frequency condition such as 3600 Hz versus 3640 Hz, the frequency bands are almost overlapped and are difficult to be separated.
(3) In Pat. 224. solving simultaneous equations is a required procedure to separate mixed signals. However, the circuit for solving simultaneous equations is too huge and complicate to be designed. The efficiency of this circuit is sub-optimal due to prolonged calculation time. In additions, the total cost will rise.

Therefore, there is room for advancing the techniques revealed in Pat. 224.

### Disclosure of the Invention

The invention is defined in the accompanying claims.

Embodiments of the invention provide a method and apparatus which can transmit mixed signals without interruptions within all time periods and the value of the mixed signals are zero at the boundaries of each time period.

Other embodiments of the invention provide a method and apparatus for processing a plurality of signals which can mix a synchronous signal into the main data signal, transmit this mixed signal, and separate the synchronous signal at the receiving end. The separated synchronous signal is served as the time controller for the subsequent processing. Therefore, this method can transmit signals within the whole time period [T₀, T₁], complete the cycles (period) of the signals within each of the time period and avoid the interruptions caused by the intervals for transmitting synchronous signals as described in Pat. 224.

Yet other embodiments of the invention provide a method and apparatus for processing of a plurality of signals, wherein, within the frequency range $( {A}_{i} \frac{{T}_{1}}{v} Hz ∼ ( {A}_{i} \frac{{T}_{1}}{v} + \frac{{T}_{1}}{2 v} ) Hz )$ of the linearly independent signal ᵢaⱼ(t) appropriate intervals are placed between two consecutive frequency bands and the interval increased as the frequency increased so as to simplify the subsequent processing.

### Brief Description of the Drawings

Fig. 1 is an embodiment of circuit blocks according to formula 4 of this invention.
Fig. 2 is an embodiment of circuit blocks according to formula 5 of this invention.
Fig. 3 is an embodiment of circuit blocks according to formula (6)-3 of this invention.
Fig. 4 is an embodiment of circuit blocks according to formula (8) of this invention.
Fig. 5 is an embodiment of circuit blocks according to formula (9)-1 of this invention.
Fig 6, Fig 7 and Fig 8 are the diagrams of the circuit blocks for separating the mixed signals at the receiving end.
Fig. 9 and Fig. 10 represent an embodiment of circuit blocks according to formula (12) of this invention.
Fig 11 and Fig 12 demonstrate an embodiment of circuit blocks for processing a plurality of signal at the receiving end.
Fig 13 is the potential output signal in the Pat. 224.

### Detailed Description of the Invention

Follows are embodiments of this invention including detail descriptions of the basic principle, processing methods and the possible outcome.

### I. The basic principles of the mixing techniques at the transmitting end.

(1) Methods described in Pat. 224
   A plurality of signals Sᵢ(t) is received within a time period [T₀,T₁], wherein i=1,2,...m, m is a positive integer, t is a time variable and t∈[T₀,T₁].
   Sᵢ(tⱼ), j=1,2,......n, are samples which have been sampled from the corresponding Sᵢ(t) within time period [T₀,T₁].
   Sᵢ(t) are multiplied by the corresponded predetermined m x n sets of the linearly independent function groups ᵢaⱼ(t) to established m sets of transformed signal ${S}_{i}^{o} ( t ) .$ ${S}_{i}^{o} ( t )$ can be mathematically represented as: ${S}_{i}^{o} ( t ) = {\sum }_{j = 1}^{n} [ {a}_{j} ( t ) {S}_{i} ( {t}_{j} ) j ]$ $i = 1 , 2 , ... m$
   The m sets of the transformed signal S⁰ᵢ(t) are summed to obtain a preliminary mixed signal SM(t). This procedure is mathematically represented as: $SM ( t ) = {\sum }_{i = 1}^{m} {S}_{i}^{o} < formula 1 >$
   In Pat. 224, SM(t) is the signal to be transmitted to the receiving end.
(2) In this invention, we provide an embodiment which can advance the mixing technique as revealed in Pat. 224.
   Let T₀ to be zero and the basic angular ${w}_{o} = \frac{2 π}{{T}_{1}} .$The signal transmitted to the receiving end is: $SMS ( t ) = Sin ( {pw}_{o} t ) \times SM ( t ) + Sin ( {qw}_{o} t ) < formula 2 >$
   Wherein $P = \frac{r + 1}{2} ,$r can be a positive integer or zero; q can be $\frac{1}{2}$ or 1.
   In formula 2, the values of signal SMS(t) are zero at the boundaries of every time period [0,T₁]. Therefore, interruptions as described in Pat. 224 will not happen. In other words, interruption cancellation signal Sin(pwₒt) can ensure the value of SMS(t) to be zero at both the starting and ending points of each time period.
   In formula 2, the synchronous signal Sin(qwₒt) is served as a discriminating signal for discriminating each of the time periods. The precise point within each time period can be known by checking the value of signal Sin(qwₒt). The method for precisely extracting signal Sin(qwₒt) out of the mixed signals is presented else where in this document. If $q = \frac{1}{2} ,$ every half cycle of Sin(qwₒt) represents the point of finishing the previous time period and starting the subsequent time period. Whereas, if q=1, every full cycle of Sin(qwₒt) represents the point of finishing the previous time period and starting the following time period.
   An embodiment of this mixing technique requires the following hardware:
   At least a receiving unit, for receiving the signal Sᵢ(t);
   Several A/D converters, for sampling and digitizing the signal Sᵢ(t);
   Several signal generators, for generating signal ᵢaⱼ(t);
   Several first multipliers, for calculating the product of Sᵢ(tⱼ) x ᵢaⱼ(t), wherein, Sᵢ(tⱼ) is the j^{th} sample of Sᵢ(t) ;
   At least a first adder, for calculating $SM ( t ) = {\sum }_{i = 1}^{m} {S}_{i}^{o} ( t ) ;$
   A synchronous signal generator, for generating a synchronous signal *sin(w*_{*0*}*t)* within the time period [T₀,T₁];
   At least a second multiplier and a second adder, calculating SMS(t)=Sin(pw₀t)×SM(t)+Sin(qw₀t) ;
   And a transmitter transmitting the processed mixed signal SMS(t).
(3) The second embodiment illustrates a better method to select ᵢaⱼ(t) in compared with that in Pat. 224.
   This mixing technique can mix sound signals and comprise three steps:
   Step 1: Selecting the frequency range of ᵢaⱼ(t) to be between ${A}_{i} \frac{{T}_{1}}{v} Hz ∼ ( {A}_{i} \frac{{T}_{1}}{v} + \frac{{T}_{1}}{2 v} ) Hz ,$ wherein, Ai are positive integers including zero; In other words, the frequency range of ᵢaⱼ(t) is between ${A}_{1} \frac{{T}_{1}}{v} Hz ∼ ( {A}_{1} \frac{{T}_{1}}{v} + \frac{{T}_{1}}{2 v} ) Hz ,$ the frequency range of ₂aⱼ(t) is between ${A}_{2} \frac{{T}_{1}}{v} Hz ∼ ( {A}_{2} \frac{{T}_{1}}{v} + \frac{{T}_{1}}{2 v} ) Hz ,$ and so forth; wherein, v is a positive integer.
   Step 2: In formula 1, obtaining v samples from SM(tₛ) (s=1,2,......v).
   Step 3 : S electing a dditional v sets of function groups bv(t) which are linear independent within the time period [0,T₁], establishing TSM(t) by formula 3: $TSM ( t ) = {\sum }_{s = 1}^{v} [ SM ( {t}_{s} ) {b}_{s} ( t ) ] < formula 3 >$
   Step 4: In order to mix the synchronous signal and eliminate possible interruptions at the boundaries of each time period, the actual signal received by the receiving unit is TSMS(t) which can be mathematically represented as: $TSMS ( t ) = sin ( {pw}_{0} t ) TSM + sin ( {qw}_{0} t ) < formula ( 3 ) - 1 >$

Wherein, p=(r+1)/2 , r can any positive integers including zero, q can be 1/2 or 1, and w₀=2π/T₁.

In the second embodiment of this invention, the amount of transmitted data is increased within a limited bandwidth.

This second embodiment requires the following hardware:
m sets of A/D converters, for sampling and digitizing signal Sᵢ(t);
m x n signal generators, for generating signal ᵢaⱼ(t), wherein, the frequency range of the signal ᵢaⱼ(t) is ${A}_{i} \frac{{T}_{1}}{v} Hz ∼ ( {A}_{i} \frac{{T}_{1}}{v} + \frac{{T}_{1}}{2 v} ) Hz ,$ *v=1,2,...m*' ;
m x n first multipliers, for calculating the product function of Sᵢ(tⱼ) x ᵢaⱼ(t), wherein, Sᵢ(tⱼ) is the j^{th} sample of the signal Sᵢ(t);
At least a first adder, for calculating $SM ( t ) = {\sum }_{i = 1}^{m} {S}_{i}^{o} ( t ) ; ;$
A synchronous signal generator, for generating synchronous signal *sin(w*_{*0*}*t)* within the time period [T₀,T₁];
At least a converter, for sampling v samples from signal SM(t); -
Several third signal generators, for generating v sets of linearly independent function groups bₛ(t);
At least a second multiplier and a second adder, for calculating the transformed signal TSM(t) of the signal SM(tₛ);
At least a second multiplier and a second adder, for calculating the mixed signal TSMS(t); and,
A transmitter transmitting processed mixed signal SMS(t).

### II. Basic principles of separating the mixed signal at the receiving end:

### (1) Basic principle 1 -solving homogenous ordinary difference equations

The solution of formula (4) is yₖ=c₁cos kθᵢ+c₂sin k θᵢ' wherein c₁ and c₂ are any constants. ${y}_{k - 2} - 2 {cosθ}_{i} {y}_{k - 1} + {y}_{k} = 0 < formula ( 4 ) >$

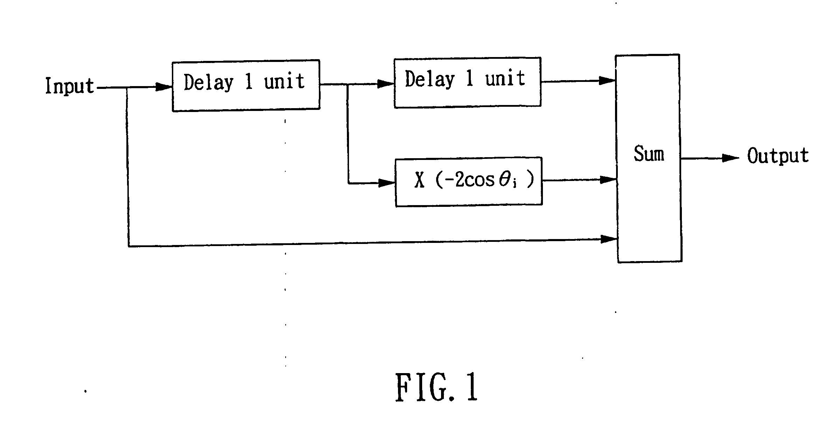

This behaves like a single frequency filter. Descriptions are provided in the circuit blocks of figure 1. Hence, if the frequency of a signal is θᵢ, the value of this signal will become zero and be filtered out. By gradually varying the value of θᵢ, unwanted signals can filtered out. An embodiment of formula 4 is described by the circuit blocks of figure 1. If the input is c₁ cos k θᵢ+c₂ sin k θᵢ, the output is zero. In other words, input signals which contain angular frequency θᵢ are filtered out.

Utilizing S to represented the difference operator so that formula 4 can be modified as formula (4)-1. $( {S}^{- 2} - 2 {cosθ}_{i} {S}^{- 1} + {S}^{0} ) {y}_{k} = 0 < formula ( 4 ) - 1 >$

Formula 5 represents a difference equation of forth order (S⁻²-2cosθ ₁S⁻¹+S⁰)(S⁻²-2cosθ₂S⁻¹+S⁰)yₖ=0

Formula (5) can also be represented as: $\begin{matrix}[ {S}^{- 4} - 2 ( {cosθ}_{1} + {cosθ}_{2} ) {S}^{- 3} + ( 4 {cosθ}_{1} {cosθ}_{2} + 2 ) {S}^{- 2} - 2 ( {cosθ}_{1} + cosθ \\ {S}^{- 1} + {S}^{0} ] 2 {y}_{k} = 0\end{matrix}$
Thus:$\begin{matrix}{y}_{k - 4} - 2 ( {cosθ}_{1} + {cosθ}_{2} ) {y}_{k - 3} + ( 4 {cosθ}_{1} {cosθ}_{2} + 2 ) {y}_{k - 2} - 2 ( {cosθ}_{1} + cosθ \\ ) {y}_{k - 1} + {y}_{k} = 0 2 < formula ( 5 ) - 1 >\end{matrix}$

The solutions of the formula (5)-1 is yₖ=c₁coskθ₁+c₂sinkθ₁+c₃cosk θ₂+c₄sinkθ₂ ; c₁ 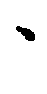 c₂ 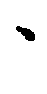 c₃ and c₄ are constants.

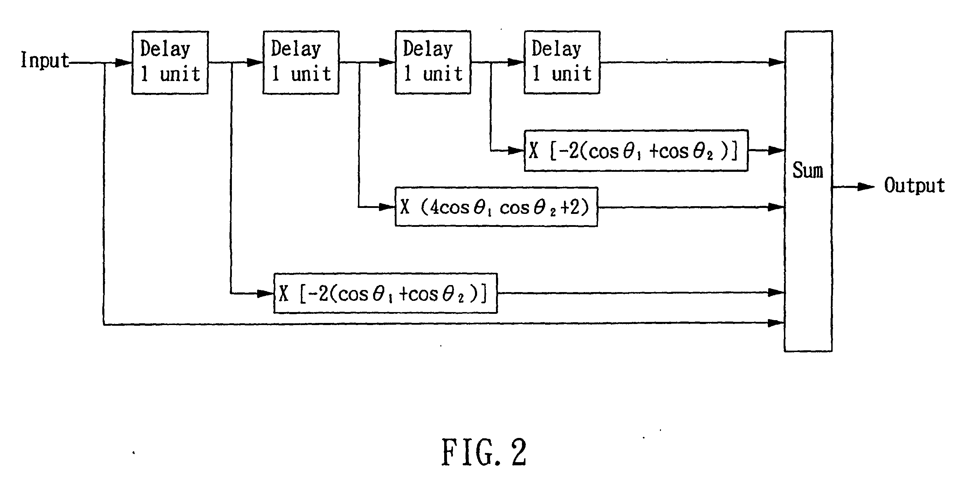

An embodiment of formula 5 is described by the circuit blocks of figure 2, wherein, input signals which contain the angular frequencies θ₁ and θ₂ are filtered out.

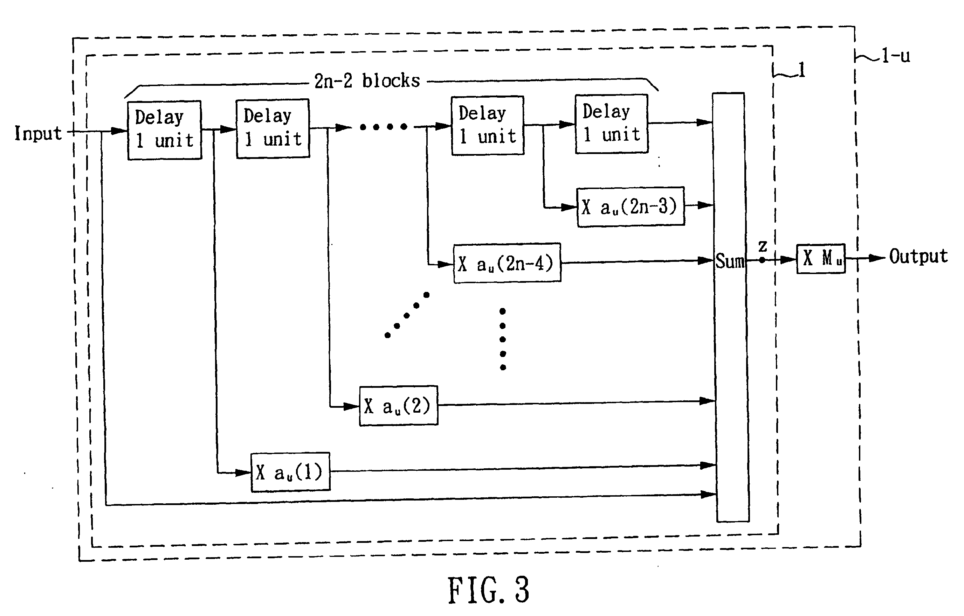

Formula 6 is a ordinary difference equation of 2(n-1)^{th} order. $[ {\prod }_{i = 1}^{u - 1} ( {S}^{- 2} - 2 {cosθ}_{i} {S}^{- 1} + 1 ) \cdot {\prod }_{i = u + 1}^{n} ( {S}^{- 2} - 2 {cosθ}_{i} {S}^{- 1} + 1 ] {y}_{k} = 0 < formula ( 6 ) >$
Formula (6) can be modified into formula (6)-1. ${L}_{u} ( S ) {y}_{k} = 0 < formula ( 6 ) - 1 >$
Wherein: ${L}_{u} ( s ) = {\prod }_{i = 1}^{u - 1} ( {S}^{- 2} {cosθ}_{i} {S}^{- 1} + 1 ) \cdot {\prod }_{i = u + 1}^{n} ( {S}^{- 2} {cosθ}_{i} {S}^{- 1} + 1 )$ , n are positive integers.
Formula (6) and formula (6) - 1 can further be modified into formula (6)-2: $\begin{matrix}{a}_{u} ( 2 n - 2 ) {y}_{k - 2 n + 2} + {a}_{u} ( 2 n - 3 ) {y}_{k - 2 n + 3} + {a}_{u} ( 2 n - 4 ) {y}_{k - 2 n + 4} + ... + {a}_{u} ( 1 ) {y}_{k - 1} + {a}_{u} ( 0 ) {y}_{k} = \\ 0 < formula ( 6 ) - 2 >\end{matrix}$
Wherein, aᵤ(v), v=0, 1,...2n-2, are the coefficients of S^{-v} after development of Lᵤ(S).
Because both aᵤ(2n-2) and aᵤ (0) are equal to 1, formula (6)-2 can be modified into formula (6)-3: ${y}_{k - 2 n + 2} + {a}_{u} ( 2 n - 3 ) {y}_{k - 2 n + 3} + {a}_{u} ( 2 n - 4 ) {y}_{k - 2 n + 4} + ....... + {a}_{u} ( 1 ) {y}_{k - 1} + {y}_{k} = 0 < formula ( 6 ) - 3 >$
The circuit blocks of figure 3 represented an embodiment of formula (6)-3.
The solution of formula (6)-3 is:${y}_{k} = {\sum }_{i = 1}^{u - 1} ( {C}_{i} {cos k θ}_{i} + {b}_{i} {sin k θ}_{i} + {\sum }_{i = u + 1}^{n} ( {C}_{i} {cosθ}_{i} + {b}_{i} {sin k θ}_{i} )$
; *C*_{*i*} and *b*_{*i*} are constants.
Therefore, in figure 3, if the input signals are ${\sum }_{i = 1}^{n} ( {A}_{i} {cos k θ}_{i} + {B}_{i} {sin k θ}_{i} ,$ all signals will be filtered out at point z of figure 3 except Aᵤcosk θᵤ+Bᵤsinkθᵤ. The value of Mu is ${M}_{u} = \frac{1}{2 \cdot {\prod }_{i = 1}^{u - 1} ( {cosθ}_{u} - {cosθ}_{i} )} \cdot \frac{1}{{\prod }_{i = u + 1}^{n} ( {cosθ}_{u} - {cosθ}_{i} )} < formula ( 7 ) >$

At point z, because signal *A*_{*u*}cos*k*θ_{*u*}+*B*_{*u*}sin*k*θ_{*u*} is diminished to be $\frac{1}{{M}_{u}}$ of the original, it has to be multiplied by *M*_{*u*} to be the actual output.

An embodiment of the basic principle 1 for separating the mixed signal at the receiving end requires the following hardware:

A receiving unit, for receiving processed mixed signals:
At least a sampling unit, for sampling 2n-1 samples from the processed mixed signal and the 2n-1 samples being mathematically represented as: yₖ₋₂ₙ₊₂, yₖ₋₂ₙ₊₃, ...yₖ ;
A signal generator, for generating 2n-3 pre-determined constant coefficients, aᵤ(1), aᵤ(2), ...aᵤ(2n-3); and
Several multipliers and adders, for producing the following output signals: $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ....... + {a}_{u} ( 1 ) {y}_{k - 1} + {y}_{k} ] * {M}_{u}$ , wherein, ${M}_{u} = \frac{1}{2 \cdot {\prod }_{i = 1}^{u - 1} ( {cosθ}_{u} - {cosθ}_{i} )} \cdot \frac{1}{{\prod }_{i = u + 1}^{n} ( {cosθ}_{u} - {cosθ}_{i} )} .$

### (2) Basic principle 2 - solving the homogeneous ordinary differential equations:

Formula 8 is a homogeneous ordinary differential equation. , $( {D}^{2} + {w}_{i}^{2} ) y ( t ) = 0 < formula ( 8 ) >$

The solution of formula 8 is *y*(*t*) = *C*₁cos*w*_{*i*}*t* + *C*₂sin *w*_{*i*}*t* ; C₁ and C₂ are constants.

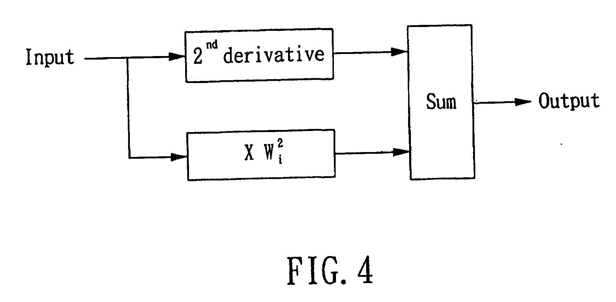

An embodiment of formula 8 is presented in the circuit blocks of figure 4. Input signals which contain angular frequency wᵢ are filtered out.

Formula 9 is ordinary differential equation of 2(n-1)^{th} order. , $[ {\prod }_{i = 1}^{u - 1} ( {D}^{2} + {w}_{i}^{2} ) {\prod }_{i = u + 1}^{n} ( {D}^{2} + {w}_{i}^{2} ) ] y ( t ) = 0 < formula ( 9 ) >$

Formula (9) can be represented as formula (9)-1: $[ {D}^{2 n - 1} + {α}_{u} ( n - 2 ) {D}^{2 n - 4} + {α}_{u} ( n - 3 ) {D}^{2 n - 6} + ... + {α}_{u} ( 1 ) {D}^{2} + 1 ] y ( t ) = 0 < formula ( 9 ) - 1 >$
wherein, α_{*u*}(*j*) are the coefficients of *D*^{2*n*-2*j*} , j=1,2,...,n-2, after development of ${\prod }_{i = 1}^{u - 1} ( {D}^{2} + {w}_{i}^{2} ) {\prod }_{i + u + 1}^{n} ( {D}^{2} + {w}_{i} ) .$

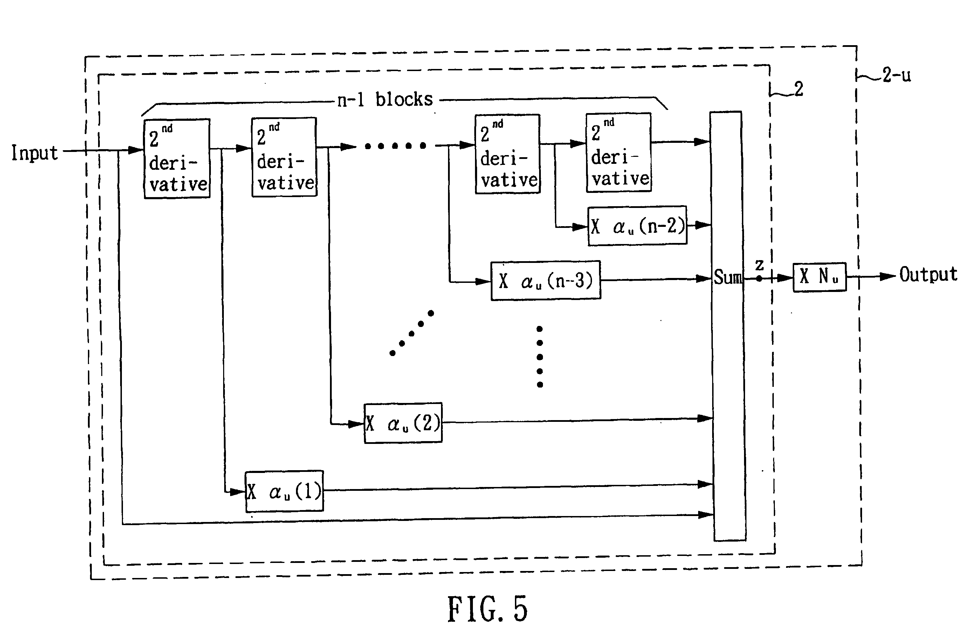

Circuit blocks of figure 5 represent an embodiment of formula (9)-1. In figure 5, after inputting signal ${\sum }_{i = 1}^{n} ( {C}_{i} {cos w}_{i} t + {d}_{i} {sin w}_{i} t ) ,$ all signals will be filtered out at point z, except Cᵤ cos wᵤt+ dᵤsin wᵤt, wherein, Cᵢ and dᵢ are constants.

The value of Nᵤ is represented in formula 10. ${N}_{u} = \frac{1}{{\prod }_{i = 1}^{u - 1} ( - {w}_{u}^{2} + {w}_{i}^{2} )} * \frac{1}{{\prod }_{i + 1}^{n} ( - {w}_{u}^{2} + {w}_{i}^{2} )} < formula ( 10 ) >$

At the point z of figure 5, signal Cᵤ cos wᵤt+ dᵤsin wᵤt is diminished to be $\frac{1}{{N}_{u}}$ of the original. Therefore, the signal Cᵤ cos wᵤt+ dᵤsin wᵤt has to be multiplied by Nᵤ to be the actual output.

An embodiment of the basic principle 2 for separating the mixed signal at the receiving end requires the following hardware:
A receiving unit, for receiving processed mixed signal;
Several differentiators, for calculating derivatives of the received processed mixed signal and obtaining the following values: D²ⁿ⁻² y(t), D²ⁿ⁻⁴ y(t), ... D² y(t), wherein, D^{x} y(t) represented the x^{th} derivative of y(t) ;
A signal generator, for generating n-2 pre-determined constant coefficients, αᵤ(1), αᵤ(2),...αᵤ(n-2) ; and

Several multipliers producing following output signals: $[ {D}^{2 n - 1} + {α}_{u} ( n - 2 ) {D}^{2 n - 4} + {α}_{u} ( n - 3 ) {D}^{2 n - 6} + ... + {α}_{u} ( 1 ) {D}^{2} + 1 ] * {N}_{u} ,$ wherein , α_{*u*}(*j*) are the coefficients of *D*^{2*n*-2*j*}, j=1,2,...,n-2, after development of ${\prod }_{i = 1}^{u - 1} ( {D}^{2} + {w}_{i}^{2} ) {\prod }_{i + u + 1}^{n} ( {D}^{2} + {w}_{i} ) ;$ and , ${N}_{u} = \frac{1}{{\prod }_{i = 1}^{u - 1} ( - {w}_{u}^{2} + {w}_{i}^{2} )} * \frac{1}{{\prod }_{i + 1}^{n} ( - {w}_{u}^{2} + {w}_{i}^{2} )} .$

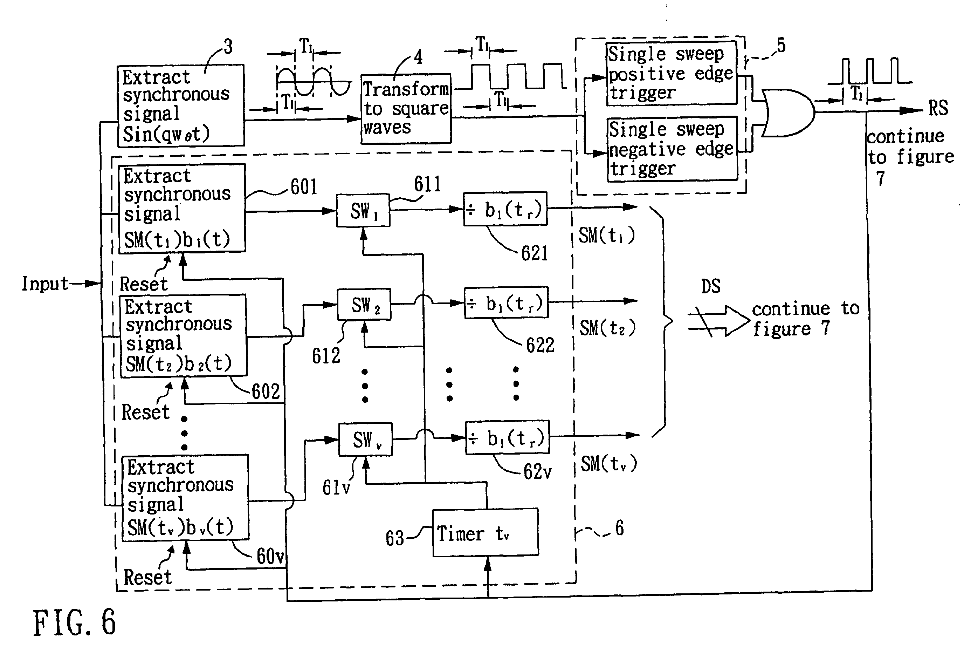

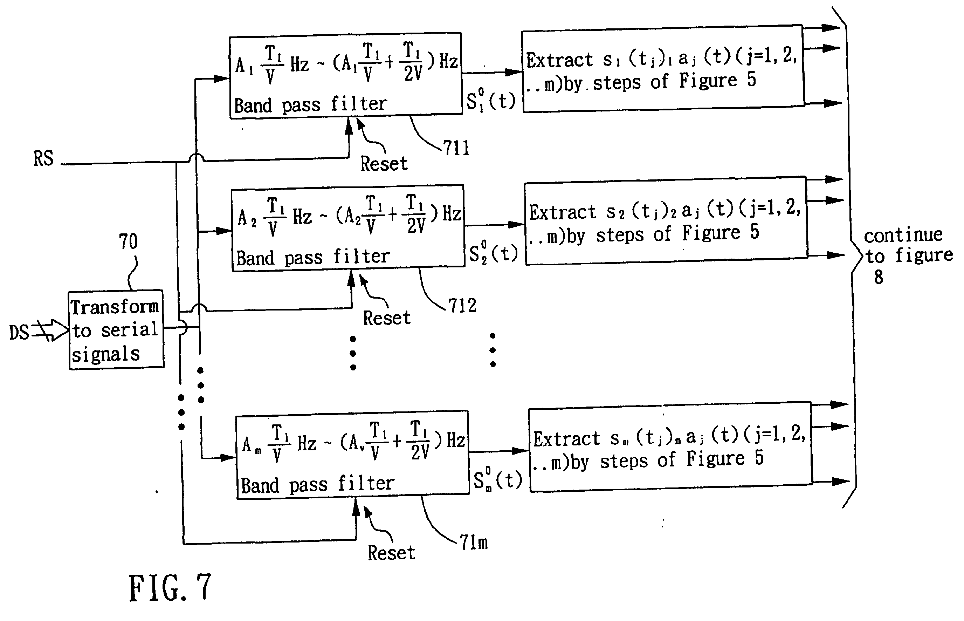

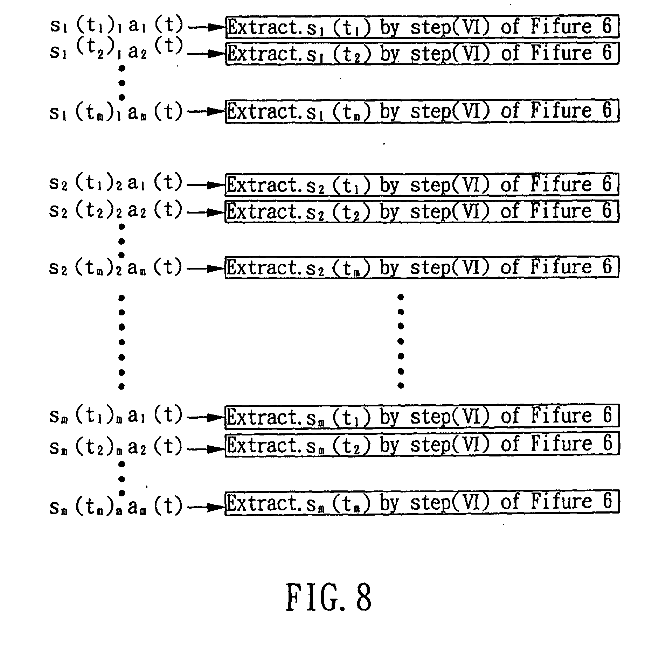

(3) Basic principle 3 - There are 6 steps for separating signals which coupled with the signal mixing techniques described above. An embodiment is illustrated in the circuit blocks of figure 6, figure 7, and figure 8. :
Step 1: selecting ᵢaⱼ(t) which contain either pure *sin (w*_{*ij*}*t)* or pure *cos (w*_{*ij*}*t)* sinusoidal signal, wherein, all *w*_{*ij*} are different positive integers.
Step 2: If q=1/2, extracting the synchronous signal *sin* (*qw*_{*0*}*t*) from TSM(t) of formula 3 by the method described in figure 5. The steps of extracting the synchronous signal are presented in (3), (4), and (5) of figure 6.
Step 3: In formula (3), TSM(t) contains angular frequency *qw*_{*0*}, | *pw*_{*0*}±*w*_{*s*} | (s=1,2,...v). Using the methods described in figure 5, extracting signals SM(t₁)b₁(t) , SM(t₂)b₂(t) , ... SM(tᵥ)bᵥ(t) individually. Detail steps of extracting these signals are presented in 601~60v of figure 6.
Step 4: tᵣ is selected within the time period [T₀,T₁]. Each of the bₛ(tᵣ) (s=1,2,...v) is divided by the corresponding bₛ(tᵣ) to obtain SM(t₁), SM(t₂), ...SM(tᵥ). These procedures are presented in 621 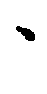 622 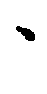 , ... 62v of figure 6. Before extracting the SM(tₛ) (s=1,2,...v), timer 63 outputs a pulse at the time when t=tᵣ and the switch SWₛ (s=1,2,...v) is turned ON. The output of 601 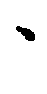 602 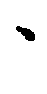 ... 60v circuit blocks are fed into dividers 621 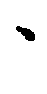 622 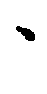 ... 62v, in respectively. The embodiment of this divider can be a resistance voltage divider.
Step 5: 711~71m of figure 7 is utilizing general sampling theory.
step 6: as described in Figure 8.

### III. Illustration of a simple embodiment

### (1) at the transmitting aspect:

1. In formula (1), letting n=8 and m=5; ${S}_{i}^{o} ( t ) = {\sum }_{j = 1}^{n} [ {a}_{j} ( t ) {S}_{i} ( {t}_{j} ) j ]$ $SM ( t ) = {\sum }_{i = 1}^{m} i$
2. letting T₀=0 and T₁=10⁻³, thus, w₀=2000π; in formula 2, letting p=q=1/2
3. selecting five different sound signals, Sᵢ(t), t=1,2,3,4,5;
4. letting w(u)=2[300+130(u-1)]π' selecting: $\begin{matrix}{a i}_{j} ( t ) = cos [ w ( i * \frac{j + 1}{2} ) t ] ( if j are odd numbers ) ; {a i}_{j} ( t ) = sin [ w ( i * \frac{j}{2} ) t ] \\ ( if j are even numbers ) < formula ( 11 ) >\end{matrix}$
   Thus, SMS(t) of formula (2) is presented as: $SMS ( t ) = sin ( 1000 πt ) {\sum }_{i = 1}^{5} {\sum }_{j = 1}^{8} {S}_{i} ( {t}_{i} {)}_{i} {a}_{j} ( t ) + sin ( 1000 πt ) < formula ( 12 ) >$
   Wherein, ${\sum }_{i = 1}^{5} {\sum }_{j = 1}^{8} {S}_{i} ( {t}_{i} {)}_{i} {a}_{j} ( t ) + sin ( 1000 πt ) =$${\sum }_{i = 1}^{5} [ {S}_{i} ( {t}_{1} ) cos ( w ( i ) t ) + {S}_{i} ( {t}_{2} ) sin ( w ( i ) t ) + {S}_{i} ( {t}_{3} ) cos ( w ( 2 i ) t ) + ... + {S}_{i} ( {t}_{8} ) sin ( w ( 4 i ) t ) ] < formula ( 12 ) - 1 >$ $\begin{matrix}= & {S}_{1} ( {t}_{1} ) cos ( 600 π t ) + {S}_{1} ( {t}_{2} ) sin ( 600 π t ) + ... + {S}_{1} ( {t}_{8} ) sin ( 1380 π t ) \\ & + {S}_{2} ( {t}_{1} ) cos ( 1640 π t ) + {S}_{2} ( {t}_{2} ) sin ( 1640 π t ) + ... + {S}_{2} ( {t}_{8} ) sin ( 2420 π t ) \\ & + {S}_{3} ( {t}_{1} ) cos ( 2680 π t ) + {S}_{3} ( {t}_{2} ) sin ( 2680 π t ) + ... + {S}_{3} ( {t}_{8} ) sin ( 3460 π t ) \\ & + {S}_{4} ( {t}_{1} ) cos ( 3720 π t ) + {S}_{4} ( {t}_{2} ) sin ( 3720 π t ) + ... + {S}_{4} ( {t}_{8} ) sin ( 4500 π t ) \\ & + {S}_{5} ( {t}_{1} ) cos ( 4760 π t ) + {S}_{5} ( {t}_{2} ) sin ( 4760 π t ) + ... + {S}_{5} ( {t}_{8} ) sin ( 5540 π t ) < formula ( 12 ) - 2 >\end{matrix}$

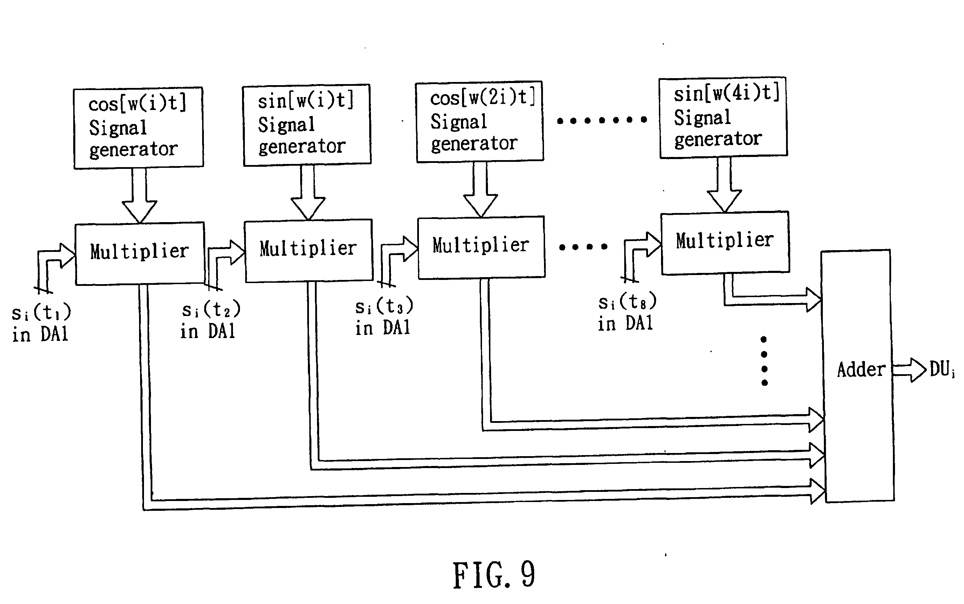

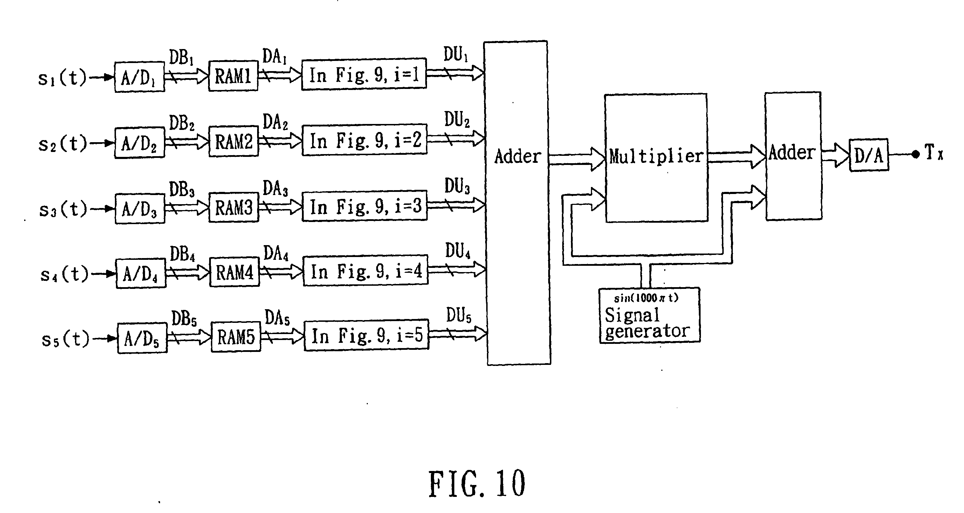

Therefore, formula 12 contains angular frequencies (1000±600)π, (1000±860)π, (1120±1000)π, ..... (5540±1000)π and 1000π. Except for the sinusoidal signal, sin(1000πt), which is served as the synchronous signal, all others signals have the same amplitude as that of the original sound signals. For example, the amplitude of cos[(1000±600)πt] is S₁(t₁); the amplitude of sin[(1000±600)πt] is S₁(t₂) ^{,} ..... ^{,} and the amplitude of sin[(5540±1000)πt] is S₅(t₈) ° 5. Figure 9 and Figure 10 demonstrate an embodiment of formula (12) for the transmitting end. Wherein, the transmitting signal Tx of Figure 10 represents the signal SMS(t) which is the actual signal to be transmitted from the transmitting end. Because the details of mixing techniques have been described previously in this invention, the purpose of this embodiment is merely to provide a uncomplicated example. More detail illustrations can also be referred to Figure 9 and Figure 10.

### (2) at the receiving aspect:

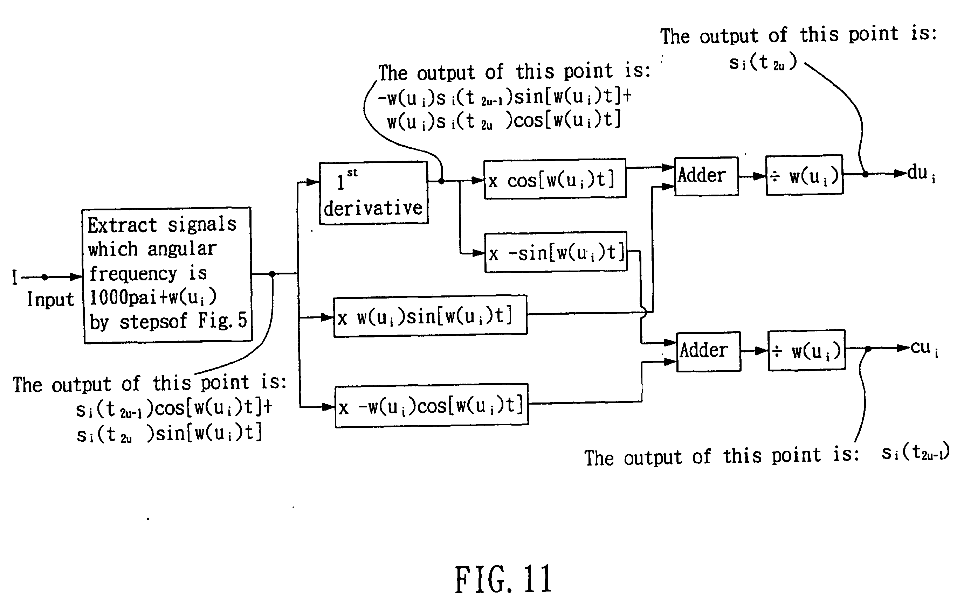

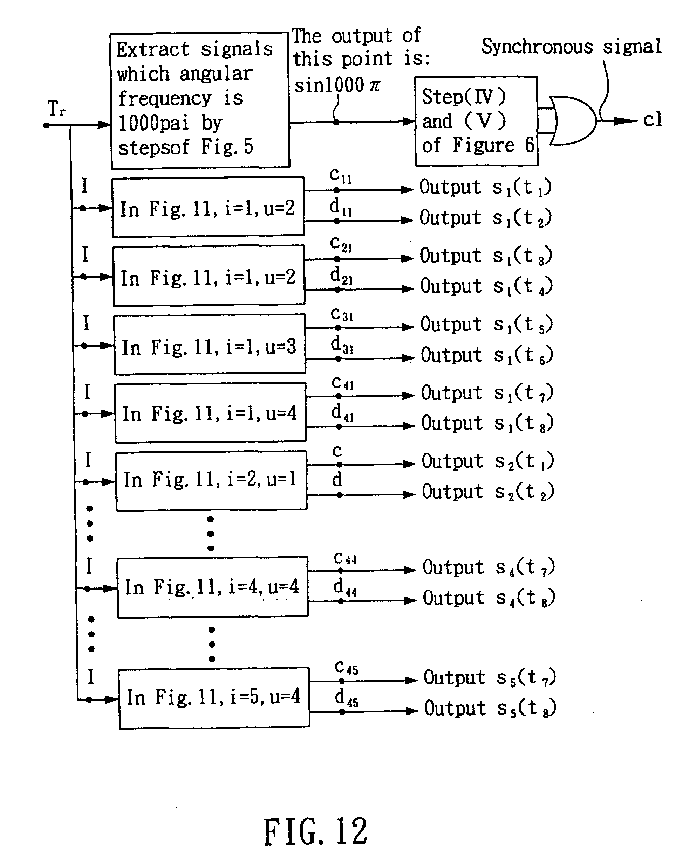

The circuit blocks of Figure 11 and Figure 12 demonstrate an embodiment at the receiving end. Tr of Figure 12 is the input signal received from the transmitting end. c1 is the output of synchronous signal which re-sets all the circuit blocks. Because the details of mixing techniques have been described previously in this invention, the purpose of this embodiment is merely to provide a uncomplicated example. More detail illustrations can also be referred to Figure 11 and Figure 12.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claim.

## Claims

1. A method for processing a plurality of signals, comprising the steps of:
(a). receiving a plurality of analog signals *S*_{*i*}(*t*) within a time period [*T*₀,*T*₁], wherein i = 1,2,...m, m is positive integer, t is time variable and t ∈[*T*₀,*T*₁]; T₀, T₁∈*R;*
(b). sampling said plurality of analog signals *S*_{*i*}(*t*) within said time period ∈[*T*₀, *T*₁] and obtaining n samples *S*_{*i*}(*t*_{*j*}) for each analog signal, wherein j = 1, 2,...n, n is positive integer, tⱼ ∈[*T*₀, *T*₁];
(c). selecting m × n predetermined linearly independent groups _{*i*}*a*_{*j*}(*t*) and producing a transformed signal ${S}_{i}^{0} ( t ) ,$ said transformed signal ${S}_{i}^{0} ( t )$ can be mathematically represented as ${S}_{i}^{0} ( t ) = {\sum }_{j = 1}^{n} [ {a i}_{j} ( t ) {S}_{i} ( {t}_{j} ) ] ;$ and
(d). summing all said transformed signal ${S}_{i}^{0} ( t )$ and establishing a first mixed signal SM(t) which can be mathematically represented as $SM ( t ) = {\sum }_{i = 1}^{m} {S}_{i}^{0} ( t ) ;$
**Characterised by** further comprising the steps of:
(e). selecting a predetermined synchronous signal sin(*w*₀*t*) and generating a second mixed signal SMS(t) which can be represented as *SMS*(*t*) = sin(*pw*₀*t*) × *SM*(*t*) + sin(*qw*₀*t*);
wherein *w*₀ is basic angular frequency and *w*_{*0*}, *p, q* ∈ R, *t ∈* [*T*_{*0*}*,T*_{*1*}], sin(*pw*₀*t*) is an interruption cancellation signal which zeros the initial value of said second mixed signal SMS(t) within the time period [*T*₀, *T*₁], and said second mixed signal SMS(t) becomes a continuous and interruption-free signal.

2. The method as in claim 1, wherein $p = \frac{r + 1}{2} ,$ *q* can be either 1/2 or 1, r is a positive integer or zero, and ${w}_{0} = \frac{2 π}{{T}_{1}} ;$
in addition, said method further comprising the following steps:
according to said predetermined linearly independent group _{*i*}*a*_{*j*}(*t*) and said predetermined synchronous signal sin(*w*₀*t*), obtaining 2n-3 constant coefficients *a*_{*u*}(1), *a*_{*u*}(2), ... *a*_{*u*}(2*n*-3) via resolving homogenous ordinary difference equations wherein u is a positive integer;
receiving said second mixed signal *SMS*(*t*);
sampling said received second mixed signal SMS(t) and obtaining total of 2n-1 samples separated by a fixed time delay, said 2n-1 samples can be mathematically represented as: *y*_{*k*-2*n*+2},*y*_{*k*-2*n*+3},····*y*_{*k*}; and
processing said 2n-1 samples to obtain a proposed synchronous signal, said processing method can be mathematically represented as: $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ........ + {a}_{u} ( 1 ) {y}_{k - 1} + {y}_{k} ] * {M}_{u} ,$
wherein, ${M}_{u} = \frac{1}{2 \cdot {\prod }_{i = 1}^{u - 1} ( {cosθ}_{u} - {cosθ}_{i} )} \cdot \frac{1}{{\prod }_{i = u + 1}^{n} ( {cosθ}_{u} - {cosθ}_{i} )} ,$ and θ are angular frequencies.

3. The method as in claim 1 further comprising steps for extracting a proposed synchronous signal from said second mixed signal SMS(t):
Solving said predetermined linearly independent group _{*i*}*a*_{*j*}(*t*) and said predetermined synchronous signal sin(*w*_{*o*}*t*) with homogenous ordinary differential equation method and obtaining n-2 values of constant coefficients a_{*u*}(1), *a*_{*u*}(2),...*a*_{*u*}(*n*-2) wherein u is a positive integer;
receiving said second mixed signal *SMS*(*t*);
in a time period, received said second mixed signal SMS(t) is mathematically represented as y(t), and using 2^{nd} order differentiators to obtain n-1 derivatives of y(t), said n-1 derivatives being able to be represented as *D*^{2*n*-2}*y*(*t*),*D*^{2*n*-4}*y*(*t*),...*D*²*y*(*t*), wherein *D*^{*x*}*y*(*t*) is the x^{*th*} derivative of y(t); and
processing said n-1 derivatives and obtaining said proposed synchronous signal, said processing being mathematically represented as: $[ {D}^{2 n - 1} + {a}_{u} ( n - 2 ) {D}^{2 n - 4} + {a}_{u} ( n - 3 ) {D}^{2 n - 6} + ... + {a}_{u} ( 1 ) {D}^{2} + 1 ] * {N}_{u} ,$
wherein *a*_{*u*}(*j*) is the coefficient of *D*^{2*n*-2*j*}, j = 1,2,...,n-2, after development of ${\prod }_{i = 1}^{u - 1} ( {D}^{2} + {w}_{i}^{2} ) {\prod }_{i = u + 1}^{n} ( {D}^{2} + {w}_{i} ) , {and N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )} ,$
wherein w are angular frequencies.

4. A method for processing a plurality of signals, comprising the steps of:
receiving said plurality of analog signals within a time period [*T*_{*o*},*T*₁], each of said analog signals being able to be mathematically represented by an equation of *S*_{*i*}(*t*) within the time period [*T*₀,*T*₁], wherein i=1,2,...m, m is integer, t is time variable, *t* ∈[*T*_{*o*},*T*₁], *T*₀,*T*₁∈*R*;
sampling the analog signals *S*_{*i*}(*t*) within the time period [*T*₀,*T*₁] and obtain n samples for each signal, said samples being mathematically represented by *S*_{*i*}(*t*_{*j*}), wherein n is integer, j=1,2,...n, tⱼ∈[*T*₀,*T*₁];
selecting m × n predetermined linearly independent group _{*i*}*a*_{*j*}(*t*), establishing a transformed signal ${S}_{i}^{0} ( t )$ in correspondence to *S*_{*i*}(*t*), ${S}_{i}^{0} ( t )$ being able to be mathematically represented as: ${S}_{i}^{0} ( t ) = {\sum }_{j = 1}^{n} [ {a i}_{j} ( t ) {S}_{i} ( {t}_{j} ) ] ,$ wherein, the frequency of said _{*i*}*a*_{*j*}(*t*) is within ${A}_{i} \frac{{T}_{1}}{v} Hz ∼ ( {A}_{i} \frac{{T}_{1}}{v} + \frac{{T}_{1}}{2 v} ) Hz ,$ *A*_{*i*} are positive integers including zero, and ν is a positive integer;
summing all said transformed signal ${S}_{i}^{0} ( t )$ to generate a first mixed signal SM(t) which can be mathematically represented as $SM ( t ) = {\sum }_{i = 1}^{m} {S}_{i}^{o} ( t ) ;$
sampling said first mixed signal SM(t) within the time period [*T*₀,*T*₁], and obtaining v samples, said v samples being mathematically represented as SM(tₛ), wherein s=1, 2,...v , and
selecting v predetermined linearly independent groups *b*_{*s*}(*t*) and generating a second mixed signal TSM(t) which can be mathematically represented as : $TSM ( t ) = {\sum }_{s = 1}^{v} [ SM ( {t}_{s} ) {b}_{s} ( t ) ] ;$
**Characterised by** further comprising the steps of:
selecting a predetermined synchronous signal sin(*w*₀*t*), generating a third mixed signal TSMS(t) which can be mathematically represented as: $TSM ( t ) = sin ( {pw}_{0} t ) TSM + sin ( {qw}_{0} t ) ;$
wherein, *w*₀ is basic angular frequency, and *w*₀*, p, q* ∈ *R, t ∈* [T₀, *T*₁].

5. The method as in claim 4, wherein $P = \frac{r + 1}{2} ,$ r is a positive integer including zero, q can be either 1/2 or 1, and ${w}_{o} = \frac{2 π}{{T}_{1}} ;$
in addition, said method further comprising the following steps for extracting a proposed synchronous signal from said third mixed signal TSMS(t):
solving said predetermined linearly independent group _{*i*}*a*_{*j*}(*t*) and said predetermined synchronous signal sin(*w*₀*t*) with homogenous ordinary difference equation method and obtaining 2n-3 values of constant coefficients *a*_{*u*}(1),*a*_{*u*}(2)...*a*_{*u*}(2*n* - 3) wherein u is a positive integer;
receiving said third mixed signal *TSMS*(*t*);
sampling said received third mixed signal TSMS(t), getting one sample every predetermined time delay within a time period and obtaining total of 2n-1 samples, said 2n-1 samples being able to be mathematically represented as *y*_{*k*-2*n*+2},*y*_{*k*-2*n*+3},...*y*_{*k*}; and
processing said 2n-1 samples and producing said proposed synchronous signal, said processing method being able to be mathematically represented as: $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ....... + {a}_{u} ( 1 ) {y}_{k - 1} + {y}_{k} ] * {M}_{u} ,$
wherein, ${M}_{u} = \frac{1}{2 ⋅ {\prod }_{i = 1}^{u - 1} ( {cosθ}_{u} - {cosθ}_{i} )} ⋅ \frac{1}{{\prod }_{i = u + 1}^{n} ( {cosθ}_{u} - {cosθ}_{i} )} ,$ and θ are angular frequencies.

6. The method as in claim 4, wherein $P = \frac{r + 1}{2} ,$ r is a positive integer including zero, *q* can be either 1/2 or 1, and ${w}_{0} = \frac{2 π}{{T}_{1}} ;$
in addition, said method further comprising the following steps for extracting a proposed synchronous signal from said third mixed signal TSMS(t):
solving said predetermined linearly independent group _{*i*}*a*_{*j*}(*t*) and said predetermined synchronous signal sin(*w*₀*t*) with homogeneous ordinary differential equation method and obtaining n-2 values of constant coefficients *a*_{*u*}(1),*a*_{*u*}(2)...*a*_{*u*}(*n*-2) wherein u is a positive integer;
receiving said third mixed signal TSMS(t);
in a time period, received said third mixed signal TSMS(t) is mathematically represented as y(t), and using 2^{nd} order differentiators to obtain n-1 derivatives of y(t), said n-1 derivatives being able to be represented as
*D*^{2*n*-2}*y*(*t*),*D*^{2*n*-4}*y*(*t*),...*D*²*y*(*t*), wherein *D*^{*x*}*y*(*t*) is the x^{th} derivative of *y*(*t*); and
processing said n-1 derivatives and obtaining said proposed synchronous signal, said processing method being able to be mathematically represented as: $[ {D}^{2 n - 1} + {a}_{u} ( n - 2 ) {D}^{2 n - 4} + {a}_{u} ( n - 3 ) {D}^{2 n - 6} + ... + {a}_{u} ( 1 ) {D}^{2} + 1 ] * {N}_{u}$
wherein *a*_{*u*}(*j*) is the coefficient of *D*^{2*n*-2*j*}, *j* = 1, 2..., *n*-2, after development of${\prod }_{i = 1}^{u - 1} ( {D}^{2} + {w}_{i}^{2} ) {\prod }_{i = u + 1}^{n} ( {D}^{2} + {w}_{i} ) , {and N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )} ,$
wherein w are angular frequencies.

7. An apparatus for processing the method of claim 1, said apparatus comprising:
at least one receiving unit, for receiving a plurality of signals *S*_{*i*}(*t*);
a plurality of A/D converters, for sampling and digitizing said plurality of signals *S*_{*i*}(*t*);
a plurality of signal generators, for generating linearly independent signals _{*i*}*a*_{*j*}(*t*);
a plurality of first multipliers, for calculating the product functions of *S*_{*i*}(*t*_{*j*}) multiplying by _{*i*}*a*_{*j*}(*t*), wherein *S*_{*i*}(*t*_{*j*}) is the j^{th} sample of said plurality of signals *S*_{*i*}(*t*);
at least a first adder, for calculating a first mixed signal *SM*(*t*), wherein $SM ( t ) = {\sum }_{i = 1}^{m} {S}_{i}^{o} ( t ) ;$ and ${S}_{i}^{0} ( t ) = {\sum }_{j = 1}^{n} [ {a i}_{j} ( t ) {S}_{i} ( {t}_{j} ) ] ;$
**Characterised by** further comprising:
a synchronous signal generator, for generating a synchronous signal sin(*w*_{*o*}*t*), within said time period [*T*₀*, T*₁]; and
at least a second multiplier and second adder, for calculating a second mixed signal *SMS*(*t*),
wherein *SMS*(*t*) = sin(*pw*₀*t*)×*SM*(*t*)+sin(*qw*₀*t*), wherein *w*₀ is basic angular frequency and w₀, p, q ∈ R.

8. The apparatus as in claim 7, further comprising a receiver for receiving said mixed signal *SMS*(*t*), said receiver comprising:
at least a sampling unit, for sampling 2n-1 samples from said second mixed signal SMS(t), said samples being able to be mathematically represented as: *y*_{*k*-2*n*+2},*y*_{*k*-2*n*+3},...*y*_{*k*};
a signal generator, for producing 2n-3 predetermined constant coefficients *a*_{*u*}(1),*a*_{*u*}(2),...*a*_{*u*}(2*n*-3) wherein u is a positive integer; and
a plurality of multipliers and adders, for producing an output signal: $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ....... + {a}_{u} ( 1 ) {y}_{k - 1} + {y}_{k} ] * {M}_{u} ,$
Wherein ${M}_{u} = \frac{1}{2 ⋅ {\prod }_{i = 1}^{u - 1} ( {cosθ}_{u} - {cosθ}_{i} )} ⋅ \frac{1}{{\prod }_{i = u + 1}^{n} ( {cosθ}_{u} - {cosθ}_{i} )} ,$ and θ are angular frequencies.

9. The apparatus as in claim 7, further comprising a receiver for receiving said second mixed signal *SMS*(*t*), said receiver comprising:
a plurality of differentiators, for calculating derivatives of said second mixed signal *SMS*(*t*) and obtaining n-1 derivatives *D*^{2*n*-2}*y*(*t*),*D*^{2*n*-4}*y*(*t*),...*D*²*y*(*t*), wherein *D*^{*x*}*y*(*t*) is the x^{th} derivative of *y*(*t*);
a signal generator, for producing n-2 predetermined constant coefficients *a*_{*u*}(1),*a*_{*u*}(2),...*a*_{*u*}(*n*-2) wherein u is positive integer; and
a plurality of multipliers and adders, for producing an output signal: [*D*^{2*n*-1} + *a*_{*u*}(*n* - 2)*D*^{2*n*-4} + *a*_{*u*}(*n -* 3)*D*^{2*n*-6} + ... + *a*_{*u*}(1)*D*² + 1 ] * *N*_{*u*}, wherein *a*_{*u*}(*j*) are coefficients of *D*^{2*n-*2*j*} j=1,2,...,n-2 after development of ${\prod }_{i = 1}^{u - 1} ( {D}^{2} + {w}_{i}^{2} ) {\prod }_{i = u + 1}^{n} ( {D}^{2} + {w}_{i} ) ,$ and ${N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )} ,$ wherein w are angular frequencies.

10. An apparatus for using the method according to claim 4, said apparatus comprising:
m A/D converters, for sampling and digitizing said plurality of signals *S*_{*i*}(*t*);
m × n signal generators, for producing said linearly independent signal _{*i*}*a*_{*j*}(*t*); wherein the frequency range of _{*i*}*a*_{*j*}(*t*) is ${A}_{i} \frac{{T}_{1}}{v} Hz ∼ ( {A}_{i} \frac{{T}_{1}}{v} + \frac{{T}_{1}}{2 v} ) Hz ,$ ν = 1,2,...*m*,
m × n first multipliers, for calculating the product function of *S*_{*i*}(*t*_{*j*}) multiplied by _{*i*}*a*_{*j*}(*t*), wherein *S*_{*i*}(*t*_{*j*}) is the j^{th} sample of *S*_{*i*}(*t*);
at least a first adder, for calculating a mixed signal *SM*(*t*), wherein $SM ( t ) = {\sum }_{i = 1}^{m} {S}_{i}^{0} ( t ) ;$ ; and ${S}_{i}^{0} ( t ) = {\sum }_{j = 1}^{n} [ {a i}_{j} ( t ) {S}_{i} ( {t}_{j} ) ] ;$
a synchronous signal generator, for producing synchronous signals within a time period [*T*₀,*T*₁]; said synchronous signals being mathematically represented as sin(*w*₀*t*);
at least a converter, for sampling v samples from *SM*(*t*);
a plurality of third signal generators producing v linearly independent function groups b,(t);
at least a second multiplier and a second adder for calculating a second mixed signal TSM(t) of said mixed signal *SM*(*t*_{*s*}), wherein $TSM ( t ) = {\sum }_{s = 1}^{v} [ SM ( {t}_{s} ) {b}_{s} ( t ) ] ;$ and at least a third multiplier and a third adder for calculating a third mixed signal TSMS(t) wherein *TSMS*(*t*) *=* sin(*pw*_{*o*}*t*)*TSM*(*t*) + sin(*qw*₀*t*), wherein *w*₀ is basic angular frequency and *w*₀*p*,*q* ∈ *R.*

## Patentansprüche

1. Verfahren zur Verarbeitung einer Mehrzahl von Signalen mit den Schritten:
(a) Empfangen einer Mehrzahl von analogen Signalen Sᵢ(t) in einer Zeitperiode [T₀,T₁], wobei i = 1,2, ... m, m eine positive ganze Zahl, t eine Zeitvariable und t ∈ [T₀, T₁]; T₀, T₁ ∈ R sind;
(b) Abtasten der Mehrzahl von analogen Signalen Sᵢ(t) innerhalb der Zeitperiode ∈ [T₀, T₁] und Erhalten von n-Abtastwerten Sᵢ(tⱼ) für jedes analoge Signal, wobei j = 1,2, ... n, n eine positive ganze Zahl, und tⱼ ∈ [T₀, T₁] sind;
(c) Auswählen von m x n von vorbestimmten linearen unabhängigen Gruppen ᵢ*a*ⱼ(t) und Erzeugen eines transformierten Signales ${S}_{i}^{0} ( t ) ,$ wobei das transformierte Signal ${S}_{i}^{0} ( t )$mathematisch als ${S}_{i}^{0} ( t ) = {\sum }_{j = 1}^{n} [ {a i}_{j} ( t ) {S}_{i} ( {t}_{j} ) ]$ sind; und
(d) Aufsummieren aller transformierter Signale ${S}_{i}^{0} ( t )$ und Erzeugung eines ersten gemischten Signals SM(t), das mathematisch als $SM ( t ) = {\sum }_{i = 1}^{m} {S}_{i}^{0} ( t )$ dargestellt werden kann, **gekennzeichnet durch** die weiteren Schritte:
(e) Auswählen eines vorbestimmten Synchronsignals sin(w₀t) und Generieren eines zweiten gemischten Signals SMS(t), das als SMS(t) = sin(pw₀t) x SM(t)+sin(qw₀t) dargestellt werden kann, wobei w₀ eine Grund-Winkelfrequenz ist und w₀, p, q ∈ R, t ∈ [T₀,T₁], sin(pw₀t) ein Unterbrechungslöschungssignal ist, das den Anfangswert des zweiten gemischten Signals SMS(t) innerhalb der Zeitperiode [T₀,T₁] auf Null setzt, und wobei das zweite gemischte Signal SMS(t) ein ununterbrochenes unterbrechungsfreies Signal wird.

2. Verfahren nach Anspruch 1, wobei $p = \frac{r + 1}{2} ,$ q entweder 1/2 oder 1, r eine positive ganze Zahl oder Null und w₀ = $\frac{2 π}{{T}_{1}}$ sind,
und wobei das Verfahren ferner die folgenden Schritte umfasst:
Erhalten gemäß der vorbestimmten linearen unabhängigen Gruppe ᵢ*a*ⱼ(t) und dem vorbestimmten Synchronsignal sin(w₀t) von 2n-3 von konstanten Koeffizienten *a*ᵤ(1), *a*ᵤ(2), ... *a*ᵤ(2n-3) durch Lösen der homogenen gewöhnlichen Differenzgleichungen, wobei u eine positive ganze Zahl ist;
Empfangen des zweiten gemischten Signals SMS(t);
Abtasten des empfangenen zweiten gemischten Signals SMS(t) und Erhalten der Summe von 2n-1 Abtastwerten, die durch eine feste Zeitverzögerung voneinander getrennt sind, wobei die 2n-1 Abtastwerte mathematisch als yₖ₋₂ₙ₊₂,yₖ₋₂ₙ₊₃, ... yₖ dargestellt werden können; und
Verarbeiten der 2n-1 Abtastwerte zum Erhalten eines vorgeschlagenen Synchronsignals, wobei das Verarbeitungsverfahren mathematisch wie folgt dargestellt werden kann: $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ........ + {a}_{u} ( 1 ) {y}_{k - 1} + {y}_{k} ] * {M}_{u}$
wobei ${M}_{u} = \frac{1}{2 ⋅ {\prod }_{i = 1}^{u - 1} ( {cosθ}_{u} - {cosθ}_{i} )} ⋅ \frac{1}{{\prod }_{i = u + 1}^{n} ( {cosθ}_{u} - {cosθ}_{i} )} ,$
und θ Winkelfrequenzen sind.

3. Verfahren nach Anspruch 1 mit den Schritten zum Extrahieren eines vorgeschlagenen Synchronsignals aus dem zweiten gemischten Signal SMS(t):
Lösen der vorbestimmten linearen unabhängigen Gruppe ᵢ*a*ⱼ(t) und des vorbestimmten Synchronsignals sin(w₀t) mit einem Verfahren unter Anwendung einer homogenen gewöhnlichen Differenzgleichung und Erhalten von n-2 Werten von konstanten Koeffizienten *a*ᵤ(1), *a*ᵤ(2), ... *a*ᵤ(n-2), wobei u eine positive ganze Zahl ist;
Empfangen des zweiten gemischten Signals SMS(t),
wobei das in einer Zeitperiode empfangene zweite gemischte Signal SMS(t) mathematisch als y(t) dargestellt wird und wobei Differenziatoren 2. Ordnung verwendet werden, um n-1 Ableitungen von y(t) zu erhalten, wobei die n-1 Ableitungen als *D*^{2*n-*2}*y*(*t*),*D*^{2*n-*4}*y*(*t*),...*D*²*y*(*t*) dargestellt werden können, wobei *D*^{*x*}*y*(*t*) die x-te Ableitung von y(t) ist und
Verarbeiten der n-1 Ableitungen und Erhalten des vorgeschlagenen Synchronsignals, wobei die Verarbeitung mathematisch wie folgt dargestellt wird: $[ {D}^{2 n - 1} + {a}_{u} ( n - 2 ) {D}^{2 n - 4} + {a}_{u} ( n - 3 ) {D}^{2 n - 6} + ........ + {a}_{u} ( 1 ) {D}^{2} + 1 ] * {N}_{u}$
wobei *a*ᵤ(j) der Koeffizient von D^{2n-2j}, j = 1,2,...n-2 nach der Entwicklung von ${\prod }_{i = 1}^{u - 1} ( {D}^{2} + {w}_{i}^{2} ) {\prod }_{i = u + 1}^{n} ( {D}^{2} + {w}_{i} ) , {und N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )}$sind, wobei *w* Winkelfrequenzen sind.

4. Verfahren zur Verarbeitung einer Mehrzahl von Signalen mit den folgenden Schritten:
Empfangen einer Mehrzahl von analogen Signalen innerhalb einer Zeitperiode [T₀,T₁], wobei jedes analoge Signal mathematisch durch eine Gleichung von Sᵢ(t) in der Zeitperiode [T₀,T₁] darstellbar ist, wobei i=1,2,...m, m eine ganze Zahl, t eine Zeitvariable, t ∈ [T₀,T₁], T₀, T₁ ∈ R sind;
Abtasten der analogen Signale Sᵢ(t) innerhalb der Zeitperiode [T₀,T₁] und Erhalten von n Abtastwerten für jedes Signal, wobei die Abtastwerte mathematisch durch Sᵢ(tⱼ) dargestellt werden, wobei n eine ganze Zahl und j=1,2,...n, tⱼ ∈ [T₀,T₁] sind;
Auswählen von m × n vorbestimmten linear unabhängigen Gruppen ᵢ*a*ⱼ(t), Bilden eines transformierten Signals ${S}_{i}^{0} ( t ) ,$ in Übereinstimmung mit Si (t), wobei ${S}_{i}^{0} ( t )$ mathematisch als: ${S}_{i}^{0} ( t ) = {\sum }_{j = 1}^{n} [ {a i}_{j} ( t ) {S}_{i} ( {t}_{j} ) ]$ darstellbar ist, wobei die Frequenz von ᵢ*a*ⱼ(t) innerhalb von ${A}_{i} \frac{{T}_{1}}{v} Hz$ $∼ ( {A}_{i} \frac{{T}_{1}}{v} + \frac{{T}_{1}}{2 v} ) Hz$ liegt, *A*_{*i*} positive ganze Zahlen einschließlich von Null und v eine positive ganze Zahl ist;
Aufsummieren aller transformierten Signale ${S}_{i}^{0} ( t )$ zur Erzeugung eines ersten gemischten Signals SM(t), das mathematisch als $SM ( t ) = {\sum }_{i = 1}^{m} {S}_{i}^{o} ( t )$ dargestellt werden kann;
Abtasten des ersten gemischten Signals SM(t) innerhalb der Zeitperiode [T₀,T₁] und Erhalten von v Abtastwerten, wobei die v Abtastwerte mathematisch als SM(tₛ) dargestellt werden, wobei s=1, 2,...v ist und
Auswählen von v vorbestimmten linear unabhängigen Gruppen bₛ(t) und Erzeugen eines zweiten gemischten Signals TSM(t), das mathematisch als $TSM ( t ) = {\sum }_{s = 1}^{v} [ SM ( {t}_{s} ) {b}_{s} ( t ) ]$ dargestellt werden kann, **gekennzeichnet durch** die folgenden weiteren Schritte:
Auswählen eines vorbestimmten Synchronsignals sin(w₀t) und Erzeugen eines dritten gemischten Signals TSMS(t), das mathematisch als TSMS(t)=sin(pw₀t)TSM+sin(qw₀t) dargestellt werden kann, wobei w₀ eine Grundwinkelfrequenz und w₀,p,q ∈ R,t ∈ [T₀,T₁] sind.

5. Verfahren nach Anspruch 4, **dadurch gekennzeichnet, dass** $P = \frac{r + 1}{2} ,$ r eine positive ganze Zahl einschließlich von Null ist und und q entweder 1/2 oder 1 sein kann und wobei ${w}_{0} = \frac{2 π}{{T}_{1}}$ ist, wobei das Verfahren ferner die folgenden Schritte zum Extrahieren eines vorgeschlagenen Synchronsignals aus dem dritten gemischten Signal TSMS(t) umfasst:
Lösen der vorbestimmten linear unabhängigen Gruppe ᵢ*a*ⱼ(t) und des vorbestimmten Synchronsignals sin(w₀t) mit einem Verfahren unter Anwendung einer homogenen gewöhnlichen Differenzgleichung und Erhalten von 2n-3 Werten von konstanten Koeffizienten *a*ᵤ(1), *a*ᵤ(2)... *a*ᵤ(2n-3), wobei u eine positive ganze Zahl ist;
Empfangen des dritten gemischten Signals TSMS(t);
Abtasten des empfangenen dritten gemischten Signals TSMS(t), Erhalten eines Abtastwertes zu jeder vorbestimmten Zeitverzögerung innerhalb einer Zeitperiode und Erhalten von ingesamt 2n-1 Abtastwerten, wobei die 2n-1 Abtastwerte mathematisch als yₖ₋₂ₙ₊₂,yₖ₋₂ₙ₊₃,...yₖ dargestellt werden können, und
Verarbeiten der 2n-1 Abtastwerte und Erzeugen des vorgeschlagenen Synchronsignals, wobei das Verarbeitungsverfahren mathematisch wie folgt darstellbar ist: $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ........ + {a}_{u} ( 1 ) {y}_{k - 1} + {y}_{k} ] * {M}_{u}$
wobei ${M}_{u} = \frac{1}{2 ⋅ {\prod }_{i = 1}^{u - 1} ( {cosθ}_{u} - {cosθ}_{i} )} ⋅ \frac{1}{{\prod }_{i = u + 1}^{n} ( {cosθ}_{u} - {cosθ}_{i} )} ,$
und θ Winkelfrequenzen sind.

6. Verfahren nach Anspruch 4, wobei $P = \frac{r + 1}{2} ,$ r eine positive ganze Zahl einschließlich von Null ist und q entweder 1/2 oder 1 sein kann und wobei ${w}_{o} = \frac{2 π}{{T}_{1}}$ ist,
wobei das Verfahren außerdem die folgenden Schritte zum Extrahieren eines vorgeschlagenen synchronen Signals aus dem dritten gemischten Signal TSMS(t) umfasst:
Lösen der vorbestimmten linear unabhängigen Gruppe ᵢ*a*ⱼ(t) und des vorbestimmten Synchronsignals sin(w₀t) mit einem Verfahren unter Anwendung einer homogenen gewöhnlichen Differenzgleichung und Erhalten von n-2 Werten von konstanten Koeffizienten *a*ᵤ(1), *a*ᵤ(2)... *a*ᵤ(n-2), wobei u eine positive ganze Zahl ist;
Empfangen des dritten gemischten Signals TSMS(t);
Darstellen des in einer Zeitperiode empfangenen dritten gemischten Signals TSMS(t) als y(t) und Anwenden eines Differentiators 2. Ordnung zum Erhalten von n-1 Ableitungen von y(t), wobei die n-1 Ableitungen als:
*D*^{2*n*-2}*y*(*t*),*D*^{2*n*-4}*y*(*t*),...*D*²*y*(*t*) dargestellt werden können, wobei *D*^{*x*}*y*(*t*) die x-te Ableitung von y (t) ist und
Verarbeiten der n-1 Ableitungen und Erhalten des vorgeschlagenen Synchronsignals, wobei das Verarbeitungsverfahren mathematisch wie folgt dargestellt werden kann: $⌊ {D}^{2 n - 1} + {a}_{u} ( n - 2 ) {D}^{2 n - 4} + {a}_{u} ( n - 3 ) {D}^{2 n - 6} + ........ + {a}_{u} ( 1 ) {D}^{2} + 1 ⌋ * {N}_{u}$
wobei αᵤ(j) der Koeffizient von D^{2n-2j}, j = 1,2,···n-2 sind, nach der Entwicklung von ${\prod }_{i = 1}^{u - 1} ( {D}^{2} + {w}_{i}^{2} ) {\prod }_{i = u + 1}^{n} ( {D}^{2} + {w}_{i} ) , {und N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )} ,$
wobei *w* Winkelfrequenzen sind.

7. Einrichtung zum Ausführen des Verfahrens nach Anspruch 1, wobei die Einrichtung enthält:
wenigstens eine Empfangseinheit zum Empfangen einer Mehrzahl von Signalen Sᵢ(t);
eine Mehrzahl von A/D-Wandlern zum Abtasten und Digitalisieren der Mehrzahl von Signalen Sᵢ(t);
eine Mehrzahl von Signalgeneratoren zum Erzeugen von linear unabhängigen Signalen ᵢ*a*ⱼ(t);
eine Mehrzahl von ersten Verstärkern zum Berechnen der Produktfunktionen von Sᵢ(tⱼ) multipliziert mit ᵢ*a*ⱼ(t), wobei Sᵢ(tⱼ) der j-te Abtastwert der Mehrzahl der Signale Sᵢ(t) ist; und
wenigstens einen ersten Addieren zum Berechnen des ersten gemischten Signals SM(t), wobei $SM ( t ) = {\sum }_{i = 1}^{m} {S}_{i}^{0} ( t )$ und
${S}_{i}^{0} ( t ) = {\sum }_{j = 1}^{n} [ {a i}_{j} ( t ) {S}_{i} ( {t}_{j} ) ]$ sind;
**gekennzeichnet dadurch, dass** ferner ein Generator zur Erzeugung eines Synchronsignals sin(w₀t) innhalb der Zeitperiode [T₀,T₁] und
wenigstens ein zweiter Verstärker und ein zweiter Addierer zum Berechnen eines zweiten gemischten Signals SMS (t) vorgesehen sind, wobei SMS(t)=sin(pw₀t)x SM(t)+sin(qw₀t) ist, wobei w₀ eine Grundwinkelfrequenz und w₀, p, q ∈ R sind.

8. Einrichtung nach Anspruch 7, **dadurch gekennzeichnet, dass** ferner ein Empfänger zum Empfangen des gemischten Signals SMS(t) vorgesehen ist, wobei der Empfänger aufweist:
wenigstens eine Abtasteinheit zum Abtasten von 2n-1 Abtastwerten aus dem zweiten gemischten Signal SMS(t), wobei die Abtastwerte mathematisch als: yₖ₋₂ₙ₊₂, yₖ₋₂ₙ₊₃, .....yₖ, darstellbar sind,
einen Signalgenerator zur Erzeugung von 2n-3 von vorbestimmten konstanten Koeffizienten *a*ᵤ(1), *a*ᵤ(2), .... *a*ᵤ(2n-3), wobei u eine positive ganze Zahl ist, und eine Mehrzahl von Verstärkern und Addierer zur Erzeugung eines Augangssignals: $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ....... + {a}_{u} ( 1 ) {y}_{k - 1} + {y}_{k} ] * {M}_{u}$
wobei ${M}_{u} = \frac{1}{2 ⋅ {\prod }_{i = 1}^{u - 1} ( {cosθ}_{u} - {cosθ}_{i} )} ⋅ \frac{1}{{\prod }_{i = u + 1}^{n} ( {cosθ}_{u} - {cosθ}_{i} )} ,$ und θ Grundfrequenzen sind.

9. Einrichtung nach Anspruch 7, bei der ferner ein Empfänger zum Empfangen des zweiten gemischten Signals SMS(t) vorgesehen ist, wobei der Empfänger aufweist:
eine Mehrzahl von Differentiatoren zur Berechnung von Ableitungen des zweiten gemischten Signals SMS(t) und zum Erhalten von n-1 von Ableitungen D²ⁿ⁻²y(t), D²ⁿ⁻⁴y(t), ....D²y(t), wobei D^{x}y(t) die xte Ableitung von y(t) ist,
einen Signalgenerator zum Erzeugen von n-2 von vorbestimmten konstanten Koeffizienten *a*ᵤ(1), *a*ᵤ(2), .... *a*ᵤ(n-2), wobei u eine ganze positive Zahl ist, und
eine Mehrzahl von Verstärkern und Addierern zur Erzeugung eines Ausgangssignals, das durch die folgende Gleichung darstellbar ist: $⌊ {D}^{2 n - 1} + {a}_{u} ( n - 2 ) {D}^{2 n - 4} + {a}_{u} ( n - 3 ) {D}^{2 n - 6} + ........ + {a}_{u} ( 1 ) {D}^{2} + 1 ⌋ * {N}_{u}$
wobei *a*ᵤ(j) Koeffizienten von D^{2n-2j}, j = 1,2,...n-2 nach der Entwicklung von${\prod }_{i = 1}^{u - 1} ( {D}^{2} + {w}_{i}^{2} ) {\prod }_{i = u + 1}^{n} ( {D}^{2} + {w}_{i} ) und {N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )}$ sind, wobei w Winkelfrequenzen sind.

10. Einrichtung zur Anwendung des Verfahrens nach Anspruch 4, wobei die Einrichtung enthält:
m A/D-Wandler zum Abtasten und Digitalisieren der Mehrzahl der Signale Sᵢ(t);
m x n Signalgeneratoren zum Erzeugen des linearen unabhängigen Signals ᵢ*a*ⱼ(t), wobei der Frequenzbereich von ᵢ*a*ⱼ(t) ${A}_{i} \frac{{T}_{1}}{v} Hz ∼ ( {A}_{i} \frac{{T}_{1}}{v} + \frac{{T}_{1}}{2 v} ) Hz$ ist, wobei *v*=1,2,...m ist,
m x n erste Verstärker zum Berechnen der Produktfunktion von Sᵢ(tⱼ) multipliziert mit ᵢ*a*ⱼ(t), wobei Sᵢ(tⱼ) der jte Abtastwert von Sᵢ(t) ist,
wenigstens einen ersten Addierer zum Berechnen eines gemischten Signals SM(t), wobei $SM ( t ) = {\sum }_{i = 1}^{m} {S}_{i}^{0} ( t ) ;$ i und $Si ( t ) = {\sum }_{i = 1}^{n} [ {a i}_{j} ( t ) {S}_{i} ( {t}_{j} ) ]$ sind;
einen Generator zum Erzeugen von Synchronsignalen innerhalb einer Zeitperiode [T₀,T₁]; wobei die Synchronsignale mathematisch als sin(w₀t) dargestellt werden,
wenigstens einen Konverter zum Abtasten von v Abtastwerten von SM(t);
eine Mehrzahl von dritten Signalgeneratoren, die v linear unabhängige Funktionsgruppen bₛ(t) erzeugen, wenigstens einen zweiten Verstärker und einen zweiten Addierer zum Berechnen eines zweiten gemischten Signals TSM (t) aus dem gemischten Signal. SM(tₛ), wobei $TSM ( t ) =$ ${\sum }_{s = 1}^{v} [ SM ( {t}_{s} ) {b}_{s} ( t ) ]$ ist;
und wenigstens einen dritten Verstärker und einen dritten Addierer zum Berechnen eines dritten gemischten Signals TSMS(t), wobei TSMS(t) = sin(pw₀t)TSM(t)+sin(qw₀t) ist, wobei w₀ eine Grundwinkelfrequenz und w₀,p,q ∈ R sind.

## Revendications

1. Procédé de traitement d'une pluralité de signaux, comprenant les étapes consistant à :
(a) recevoir une pluralité de signaux analogiques *S*_{*i*}*(t)* dans une période de temps [T₀, T₁], où
i = 1, 2, ... m, m est un entier positif, t est une variable de temps et t ε [*T*_{*0*}, *T*_{*1*}] ; T₀, T₁ ε R ;
(b) échantillonner ladite pluralité de signaux analogiques *S*_{*i*}*(t)* dans ladite période de temps ε [*T*_{*0*}*, T*_{*1*}] et obtenir n échantillons *S*_{*i*}*(T*_{*j*}*)* pour chaque signal analogique, où j = 1, 2, ...n, n est un entier positif, tⱼ ε [*T*_{*0*}*, T*_{*1*}] ;
(c) sélectionner m x n groupes prédéterminés linéairement indépendants ᵢaⱼ(*t*) et produire un signal transformé *S*^{*0*}_{*i*} (*t*)*,* ledit signal transformé *S*^{*0*}_{*i*} (*t*) pouvant être mathématiquement représenté comme ${S}_{i}^{0} ( t ) = {\sum }_{j = 1}^{n} [ {a i}_{j} ( t ) {S}_{i} ( {t}_{j} ) ] ;$ et
(d) additionner tous lesdits signaux transformés *S*^{*0*}_{*i*} (*t*) et établir un premier signal mélangé SM(t) qui peut être mathématiquement représenté comme $SM ( t ) = {\sum }_{i = 1}^{m} {S}_{i}^{0} ( t ) ;$
**caractérisé en ce qu'**il comprend en outre les étapes consistant à :
(e) sélectionner un signal synchrone prédéterminé sin(*w*_{*0*}*t*) et générer un second signal mélangé SMS(t) qui peut être représenté comme *SMS*(*t*)=sin(*pw*₀*t*)×*SM*(*t*)+sin(*qw*₀*t*) ;
dans lequel *w*_{*0*} est la fréquence angulaire de base et *w*_{*0*}*, p, q* ∈ *R*, *t* ∈ [*T*_{*o*}*,T*_{*1*}], sin(*pw*₀*t*) est un signal d'annulation d'interruption qui annule la valeur initiale dudit second signal mélangé SMS (t) dans la période de temps [*T*_{*0*}*, T*_{*1*}], et ledit second signal mélangé SMS(t) devient un signal continu et exempt d'interruption.

2. Procédé selon la revendication 1, dans lequel $p = \frac{r + 1}{2} ,$ q peut être soit 1/2, soit 1, r est un entier positif ou zéro, et ${w}_{0} = \frac{2 π}{{T}_{1}} ;$
de plus, ledit procédé comprenant en outre les étapes suivantes :
selon ledit groupe prédéterminé linéairement indépendant ᵢaⱼ(t) et ledit signal synchrone prédéterminé sin(*w*_{*0*}*t*), l'obtention de coefficients constants 2n-3 *a*_{*u*}(1), *a*_{*u*}(2), ... *a*_{*u*}(2n-3) via la résolution d'équations aux différences ordinaires homogènes, où u est un entier positif ;
la réception dudit second signal mélangé SMS(t) ;
l'échantillonnage dudit second signal mélangé reçu SMS(t) et l'obtention d'un total de 2n-1 échantillons séparés par un décalage temporel fixe, lesdits 2n-1 échantillons pouvant être mathématiquement représentés comme : *y*_{*k*-2*n*+2}*y*_{*k*-2*n*+3},...*y*_{*k*} ; et
le traitement desdits 2n-1 échantillons afin d'obtenir un signal synchrone proposé, ledit procédé de traitement pouvant être mathématiquement représenté comme : $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ........ + {a}_{u} ( 1 ) {y}_{k - 1} + {y}_{k} ] * {M}_{u} ,$
où ${M}_{u} = \frac{1}{2 ⋅ {\prod }_{i = 1}^{u - 1} ( {cosθ}_{u} - {cosθ}_{i} )} ⋅ \frac{1}{{\prod }_{i = u + 1}^{n} ( {cosθ}_{u} - {cosθ}_{i} )} ,$ et θ sont des fréquences angulaires.

3. Procédé selon la revendication 1, comprenant en outre les étapes d'extraction d'un signal synchrone proposé à partir dudit second signal mélangé SMS(t) ;
de résolution dudit groupe prédéterminé linéairement indépendant ᵢaⱼ(*t*) et dudit signal synchrone prédéterminé sin(*w*_{*0*}*t*) avec un procédé à équations différentielles ordinaires homogènes,
et d'obtention de n-2 valeurs de coefficients constants *a*_{*u*}(1), *a*_{*u*}(2), ... *a*_{*u*}(n-2), où u est un entier positif ;
de réception dudit second signal mélangé *SMS(t) ;*
dans une période de temps, ledit second signal mélangé reçu SMS(t) est mathématiquement représenté comme y(t), et des différentiateurs de 2^{ème} ordre sont utilisés afin d'obtenir n-1 dérivées de y(t), lesdites n-1 dérivées étant capables d'être représentées comme *D*^{2*n*-2}*y*(*t*),*D*^{2*n*-4}*y*(*t*),...*D*²*y*(*t*), où *D*^{*x*}*y*(*t*) est la x^{ième} dérivée de y(t) ; et
de traitement desdites n-1 dérivées et d'obtention dudit signal synchrone proposé, ledit traitement étant mathématiquement représenté comme : $[ {D}^{2 n - 1} + {a}_{u} ( n - 2 ) {D}^{2 n - 4} + {a}_{u} ( n - 3 ) {D}^{2 n - 6} + ... + {a}_{u} ( 1 ) {D}^{2} + 1 ] * {N}_{u} ,$
où *a*_{*u*}*(j)* est le coefficient de *D*^{2*n*-2*j*},j=1,2,...,n-2, après le développement de ${\prod }_{i = 1}^{u - 1} ( {D}^{2} + {w}_{i}^{2} ) {\prod }_{i = u + 1}^{n} ( {D}^{2} + {w}_{i} ) ;$ et ${N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )} ,$
où w sont des fréquences angulaires.

4. Procédé de traitement d'une pluralité de signaux, comprenant les étapes consistant à :
recevoir ladite pluralité de signaux analogiques dans une période de temps [*T*_{*0*}*, T*_{*1*}], chacun desdits signaux analogiques étant capable d'être mathématiquement représenté par une équation de *S*_{*i*}*(t)* dans la période de temps [*T*_{*0*}*, T*_{*1*}], où i = 1, 2, ... m, m est un entier, t est une variable de temps, t ε [*T*_{*0*}*, T*_{*1*}], *T*_{*0*}*, T*_{*1*} ε *R* ;
échantillonner les signaux analogiques *S*_{*i*}*(t)* dans la période de temps [*T*_{*0*}*, T*_{*1*}] et obtenir n échantillons pour chaque signal, lesdits échantillons étant mathématiquement représentés par *S*_{*i*}*(t*_{*j*}*)*, où n est un entier, j = 1, 2, ..., n, tⱼ ε [*T*_{*0*}, *T*_{*1*}] ;
sélectionner m x n groupes prédéterminés linéairement indépendants ᵢaⱼ(t), établir un signal transformé *S*^{*0*}_{*i*} (*t*) en correspondance avec *S*_{*i*}*(t), S*^{*0*}_{*i*} (*t*) étant capable d'être mathématiquement représenté comme : ${S}_{i}^{0} ( t ) = {\sum }_{j = 1}^{n} [ {a i}_{j} ( t ) {S}_{i} ( {t}_{j} ) ] ,$ où la fréquence dudit ᵢaⱼ(*t*) se trouve dans les limites de ${A}_{i} \frac{{T}_{1}}{v} Hz ∼ ( {A}_{i} \frac{{T}_{1}}{v} + \frac{{T}_{1}}{2 v} ) Hz ,$ Aᵢ sont des entiers positifs comprenant zéro, et v est un entier positif ;
additionner tous lesdits signaux transformés *S*^{*0*}_{*i*} (*t*) afin de générer un premier signal mélangé SM(t) qui peut être mathématiquement représenté comme $SM ( t ) = {\sum }_{i = 1}^{m} {S}_{i}^{o} ( t ) ;$
échantillonner ledit premier signal mélangé SM(t) dans la période de temps [*T*_{*0*}*, T*_{*1*}] et obtenir v échantillons, chacun desdits v échantillons étant mathématiquement représenté comme SM(tₛ), où s = 1, 2, ... v, et
sélectionner v groupes prédéterminés linéairement indépendants *b*_{*s*}(*t*) et générer un second signal mélangé TSM(t) qui peut être mathématiquement représenté comme : $TSM ( t ) = {\sum }_{s = 1}^{v} [ SM ( {t}_{s} ) {b}_{s} ( t ) ] ;$
**caractérisé en ce qu'**il comprend en outre les étapes consistant à :
sélectionner un signal synchrone prédéterminé sin(*w*₀*t*), générer un troisième signal mélangé TSMS(t) qi peut être mathématiquement représenté comme : $TSM ( t ) = sin ( {pw}_{0} t ) TSM + sin ( {qw}_{0} t ) ;$
où w₀ est la fréquence angulaire de base, et *w*₀,*p*,*q*∈*R*, *t*∈[*T*₀,*T*₁].

5. Procédé selon la revendication 4, dans lequel $p = \frac{r + 1}{2} ,$ r est un entier positif comprenant zéro, q peut être soit 1/2, soit 1, et ${w}_{o} = \frac{2 π}{{T}_{1}} ;$
de plus, ledit procédé comprenant en outre les étapes suivantes d'extraction d'un signal synchrone proposé à partir dudit troisième signal mélangé TSMS(t) :
la résolution dudit groupe prédéterminé linéairement indépendant ᵢaⱼ(*t*) et dudit signal synchrone prédéterminé sin(*w*_{*0*}*t*) avec un procédé à équations différentielles ordinaires homogènes,
et d'obtention de 2n-3 valeurs de coefficients constants *a*_{*u*}(1), *a*_{*u*}(2), ... *a*_{*u*}(2n-3), où u est un entier positif ;
de réception dudit troisième signal mélangé TSMS*(t)*, d'obtention d'un échantillon à chaque décalage temporel prédéterminé dans une période de temps, et d'obtention d'un total de 2n-1 échantillons, lesdits 2n-1 échantillons étant capables d'être mathématiquement représentés comme *y*_{*k*-2*n*+2},*y*_{*k*-2*n*+3},....*y*_{*k*} ; et
de traitement desdits 2n-1 échantillons et de production dudit signal synchrone proposé, ledit procédé de traitement étant capable d'être mathématiquement représenté comme : $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ....... + {a}_{u} ( 1 ) {y}_{k - 1} + {y}_{k} ] * {M}_{u} ,$
où ${M}_{u} = \frac{1}{2 ⋅ {\prod }_{i = 1}^{u - 1} ( {cosθ}_{u} - {cosθ}_{i} )} ⋅ \frac{1}{{\prod }_{i = u + 1}^{n} ( {cosθ}_{u} - {cosθ}_{i} )} ,$et θ sont des fréquences angulaires.

6. Procédé selon la revendication 4, dans lequel $p = \frac{r + 1}{2} ,$ r est un entier positif comprenant zéro, q peut être soit 1/2, soit 1, et ${w}_{o} = \frac{2 π}{{T}_{1}} ;$
de plus, ledit procédé comprenant en outre les étapes suivantes d'extraction d'un signal synchrone proposé à partir dudit troisième signal mélangé TSMS(t) ;
de résolution dudit groupe prédéterminé linéairement indépendant ᵢaⱼ(*t*) et dudit signal synchrone prédéterminé sin(*w*_{*0*}t) avec un procédé à équations différentielles ordinaires homogènes,
et d'obtention de n-2 valeurs de coefficients constants *a*_{*u*}(1), *a*_{*u*}(2), ... *a*_{*u*}(n-2), où u est un entier positif ;
de réception dudit troisième signal mélangé TSMS(t) ;
dans une période de temps, ledit troisième signal mélangé TSMS(t) est mathématiquement représenté comme y(t), et des différentiateurs de 2^{ème} ordre sont utilisés afin d'obtenir n-1 dérivées de y(t), lesdites n-1 dérivées étant capables d'être représentées comme
*D*^{2*n*-2}*y*(*t*),*D*^{2*n*-4}*y*(*t*),...*D*²*y*(*t*), où *D*^{*x*}_{*y*}*(t)* est la dérivée de *y(t)* ; et
de traitement desdites dérivées n-1 en d'obtention dudit signal synchrone proposé, ledit procédé de traitement étant capable d'être mathématiquement représenté comme : $[ {D}^{2 n - 1} + {a}_{u} ( n - 2 ) {D}^{2 n - 4} + {a}_{u} ( n - 3 ) {D}^{2 n - 6} + ... + {a}_{u} ( 1 ) {D}^{2} + 1 ] * {N}_{u}$
où *a*_{*u*}*(j)* est le coefficient de *D*^{2*n*-2*j*},j=1,2,...,n-2, après le développement de ${\prod }_{i = 1}^{u - 1} ( {D}^{2} + {w}_{i}^{2} ) {\prod }_{i = u + 1}^{n} ( {D}^{2} + {w}_{i} ) ,$; et ${N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )} ,$
où w sont des fréquences angulaires.

7. Appareil pour le traitement du procédé de la revendication 1, ledit appareil comprenant :
au moins une unité de réception, destinée à recevoir une pluralité de signaux Si*(t)* ;
une pluralité de convertisseurs A/N, destinés à échantillonner et à numériser ladite pluralité de signaux *S*_{*i*}*(t)* ;
une pluralité de générateurs de signaux, destinés à générer des signaux linéairement indépendants ᵢaⱼ(*t*) ;
une pluralité de premiers multiplicateurs, destinés à calculer les fonctions de produit de *S*_{*i*}*(tj)* multiplié par ᵢaⱼ(*t*), où *S*_{*i*}*(tj)* est le j^{ième} échantillon de ladite pluralité de signaux *S*_{*i*}*(t)* ;
au moins un premier additionneur, destiné à calculer un premier signal mélangé *SM(t)*, où $SM ( t ) = {\sum }_{i = 1}^{m} {S}_{i}^{0} ( t ) ;$ et ${S}_{i}^{0} ( t ) = {\sum }_{j = 1}^{n} [ {a i}_{j} ( t ) {S}_{i} ( {t}_{j} ) ] ;$
**caractérisé en ce qu'**il comprend en outre :
un générateur de signal synchrone, destiné à générer un signal synchrone sin(*w*_{*0*}*t*) dans ladite période de temps [*T*_{*0*}, *T*_{*1*}] ; et
au moins un second multiplicateur et un second additionneur, destinés à calculer un second signal mélangé *SMS(t)*,
où *SMS*(*t*) = sin(*pw*₀*t*)×*SM*(*t*)+sin(*qw*₀*t*), où *w*_{*0*} est la fréquence angulaire de base et *w*_{*0*}*, p, q ∈ R*.

8. Appareil selon la revendication 7, comprenant en outre un récepteur destiné à recevoir ledit signal mélangé *SMS(t),* ledit récepteur comprenant :
au moins une unité d'échantillonnage, destinée à échantillonner 2n-1 échantillons à partir dudit second signal mélangé SMS(t),
lesdits échantillons étant capables d'être mathématiquement représentés comme : *y*_{*k*-2*n*+2}*y*_{*k*-2*n*+3},····*y*_{*k*} ;
un générateur de signal, destiné à produire 2n-3 coefficients constants prédéterminés *a*_{*u*}(1), *a*_{*u*}(2), ... *a*_{*u*}(2n-3), où u est un entier positif ; et
une pluralité de multiplicateurs et d'additionneurs, destinés à produire un signal de sortie ; $[ {y}_{k - 2 n + 2} + {a}_{u} ( 2 n - 3 ) {y}_{k - 2 n + 3} + {a}_{u} ( 2 n - 4 ) {y}_{k - 2 n + 4} + ....... + {a}_{u} ( 1 ) {y}_{k - 1} + {y}_{k} ] * {M}_{u} ,$
où ${M}_{u} = \frac{1}{2 ⋅ {\prod }_{i = 1}^{u - 1} ( {cosθ}_{u} - {cosθ}_{i} )} ⋅ \frac{1}{{\prod }_{i = u + 1}^{n} ( {cosθ}_{u} - {cosθ}_{i} )} ,$ et θ sont des fréquences angulaires.

9. Appareil selon la revendication 7, comprenant en outre un récepteur destiné à recevoir ledit second signal mélangé *SMS(t),* ledit récepteur comprenant :
une pluralité de différentiateurs, destinés à calculer les dérivées dudit second signal mélangé *SMS(t)* et à obtenir n-1 dérivées *D*^{2*n*-2}_{*y*}(*t*),*D*^{2*n*-4}_{*y*}(*t*),...*D*²*y*(*t*), où *D*^{*x*}_{*y*}*(t)* est la x^{ième} dérivée de *y(t)* ;
un générateur de signal, destiné à produire n-2 coefficients constants prédéterminés *a*_{*u*}(1), *a*_{*u*}(2), ... *a*_{*u*}(n-2),
où u est un entier positif ; et
une pluralité de multiplicateurs et d'additionneurs, destinés à produire un signal de sortie ;
[*D*^{2*n*-1}+*a*_{*u*}(*n*-2)*D*^{2*n*-4}+*a*_{*u*}(*n*-3)*D*^{2*n*-6}+...+*a*_{*u*}(1)*D*²+1]*N_{*u*}, où *a*_{*u*}*(j)* sont des coefficients de *D*^{2*n*-2*j*},j=1,2,...,n-2, après le développement de ${\prod }_{i = 1}^{u - 1} ( {D}^{2} + {w}_{i}^{2} ) {\prod }_{i = u + 1}^{n} ( {D}^{2} + {w}_{i} ) ,$; et ${N}_{u} = \frac{1}{{\prod }_{i = 1}^{u - 1} ( {- w}_{u}^{2} + {w}_{i}^{2} )} * \frac{1}{{\prod }_{i + 1}^{n} ( {- w}_{u}^{2} + {w}_{i}^{2} )} ,$ où w sont des fréquences angulaires.

10. Appareil pour utiliser le procédé selon la revendication 4, ledit appareil comprenant :
m convertisseurs A/N, destinés à échantillonner et à numériser ladite pluralité de signaux *S*_{*i*}*(t)* ;
m x n générateurs de signaux, destinés à produire ledit signal linéairement indépendant ᵢaⱼ(*t*) ;
où la gamme de fréquences de ᵢaⱼ(t) est ${A}_{i} \frac{{T}_{1}}{v} Hz ∼ ( {A}_{i} \frac{{T}_{1}}{v} + \frac{{T}_{1}}{2 v} ) Hz ,$ ν = 1, 2, ...*m*.
m x n premiers multiplicateurs, destinés à calculer la fonction de produit de *S*_{*i*}*(t*_{*j*}*)* multiplié par ᵢaⱼ(t),
où *S*_{*i*}*(t*_{*j*}*)* est le j^{ième} échantillon de *S*_{*i*}*(t)* ;
au moins un premier additionneur, destiné à calculer un signal mélangé *SM(t),* où $SM ( t ) = {\sum }_{i = 1}^{m} {S}_{i}^{0} ( t ) ;$ et ${S}_{i}^{0} ( t ) = {\sum }_{j = 1}^{n} [ {a i}_{j} ( t ) {S}_{i} ( {t}_{j} ) ] ;$
un générateur de signal synchrone, destiné à produire des signaux synchrones dans une période de temps [*T*_{*0*}*, T*_{*1*}] ;
lesdits signaux synchrones étant mathématiquement représentés comme sin (*w*_{*0*}*t*) ;
au moins un convertisseur, destiné à échantillonner v échantillons à partir de *SM*(*t*) ;
une pluralité de troisièmes générateurs de signaux produisant v groupes de fonctions linéairement indépendants *b*_{*s*}*(t)* ;
au moins un second multiplicateur et un second additionneur destinés à calculer un second signal mélangé TSM(t) dudit signal mélangé SM(*t*_{*s*}), où $TSM ( t ) = {\sum }_{s = 1}^{v} [ SM ( {t}_{s} ) {b}_{s} ( t ) ] ;$ et
au moins un troisième multiplicateur et un troisième additionneur destinés à calculer un troisième signal mélangé TSMS(t), où *TSMS*(*t*)=sin(*pw*₀*t*)*TSM+*sin(*qw*_{*0*}*t*), où *w*_{*0*} est la fréquence angulaire de base et *w*_{*0*}*, p, q* ∈ *R*.
